# EUROPEAN PATENT APPLICATION

(11) **EP 4 726 518 A1**
(43) Date of publication of application: **15.04.2026**
(21) Application number: 24867338.6
(22) Date of filing: 10.09.2024
(51) Int. Cl.: G06F 3/04842

(54) **DISPLAY METHOD AND ELECTRONIC DEVICE**

(30) Priority: 19.09.2023 CN 202311214420
(71) Applicant: Huawei Technologies Co., Ltd., Shenzhen, Guangdong 518129 (CN)
(72) Inventor: ZHANG, Chao, Shenzhen, Guangdong 518129 (CN); XIONG, Zhangliang, Shenzhen, Guangdong 518129 (CN); ZHANG, Ru, Shenzhen, Guangdong 518129 (CN); FAN, Zhenhua, Shenzhen, Guangdong 518129 (CN)
(74) Representative: Körber, Martin Hans
(86) International application number: PCT/CN2024/118087
(87) International publication number: WO 2025/060926

(57) **Abstract**

This application provides a display method and an electronic device. The method is applied to the electronic device, and the method includes: displaying a first service widget on a display; and when determining that a current scene meets a specified first condition and/or a first operation is received, switching from displaying the first service widget to displaying a second service widget and a third service widget, where the second service widget is associated with the first service widget, and the third service widget is associated with the first service widget. According to the method provided in this application, display effect of the service widget and efficiency of using the service widget can be improved.

## Description

### CROSS-REFERENCE TO RELATED APPLICATIONS

This application claims priority to Chinese Patent Application No. 202311214420.5, filed with the China National Intellectual Property Administration on September 19, 2023 and entitled "DISPLAY METHOD AND ELECTRONIC DEVICE", which is incorporated herein by reference in its entirety.

### TECHNICAL FIELD

This application relates to the field of electronic device technologies, and in particular, to a display method and an electronic device.

### BACKGROUND

A service widget is a form in which an application (application, APP) in an electronic device displays page content on a home screen, and the content of the application page may be displayed on the home screen of the electronic device by using the service widget. A user may directly jump to a corresponding application page and/or enable a corresponding application function by operating the service widget. Therefore, the service widget can greatly improve convenience of using the application by the user.

Currently, manners usually used for the electronic device to display the service widget include displaying different service widgets in a tiled mode on the home screen, automatically displaying different service widgets in a carousel mode at a location on the home screen, and the like. Display space of a single home screen of the electronic device is limited. When there are a large quantity of service widgets, a plurality of home screens may be occupied for display, and required display space is large. In addition, the user further needs to turn pages on the home screens and search the service widgets one by one for a required service widget. Consequently, display effect of the service widget in this manner is poor, and efficiency of using the service widget by the user is low. Although the manner of automatically displaying different service widgets in the carousel mode at the location on the home screen can reduce the display space occupied by the service widgets and spare the user from turning the pages to searching for the service widget, the user can view and use only one of different service widgets displayed in the carousel mode at a time. Consequently, display effect of the service widget in this manner is also poor, and efficiency of using the service widget in this manner is also low.

### SUMMARY

This application provides a display method and an electronic device, to improve display effect of a service widget and efficiency of using the service widget.

According to a first aspect, this application provides a display method, applied to an electronic device. The method includes: displaying a first service widget on a display; and when determining that a current scene meets a specified first condition and/or a first operation is received, switching from displaying the first service widget to displaying a second service widget and a third service widget, where the second service widget is associated with the first service widget, and the third service widget is associated with the first service widget.

In the method, the electronic device may automatically switch, in a specific scene, one service widget to a plurality of service widgets associated with the service widget. In this manner, associated display of the service widgets can be implemented in a small display area without a user operation. Therefore, display efficiency is high. This helps a user use a switched service widget, thereby improving use efficiency of the service widget. When receiving a user operation, the electronic device may further switch one service widget to a plurality of service widgets associated with the service widget. Associated display of the service widgets can be implemented in a small display area. Therefore, display effect is good. In addition, a service widget expected by the user can be quickly and conveniently displayed to the user. This can improve efficiency of using the service widget by the user. When receiving a user operation in a specific scene, the electronic device may further switch one service widget to a plurality of service widgets associated with the service widget. This can also improve display effect of the service widget and efficiency of using the service widget. In conclusion, according to the foregoing method, the display effect of the service widget and the efficiency of using the service widget can be improved. In addition, in the foregoing method, the electronic device may flexibly perform associated display of the service widgets in a plurality of manners, and practicability is high.

In a possible design, display areas of the second service widget and the third service widget do not overlap, or the second service widget covers a part of an area of the third service widget, or the third service widget covers a part of an area of the second service widget. In the method, display manners of the second service widget and the third service widget are flexible, and have high practicability.

In a possible design, the second service widget is the same as the first service widget, or the second service widget and the first service widget belong to a same application, or the second service widget and the first service widget belong to different applications; and the third service widget and the first service widget belong to a same application, or the third service widget and the first service widget belong to different applications. In the method, application types to which the second service widget and the third service widget belong are flexible, so that the foregoing method is applicable to rich scenarios, and has high practicability.

In a possible design, before determining that the current scene meets the specified first condition and/or the first operation is received, the method further includes: determining the second service widget and the third service widget in response to a received second operation, where the second operation indicates the second service widget and the third service widget; or determining the second service widget and the third service widget based on reference information, where the reference information includes at least one of the following information collected in a specified historical time period during display of the first service widget: time information, spatial location information of the electronic device, environment feature information of space in which the electronic device is located, attribute information of the electronic device, status information of the electronic device, user profile information of a user of the electronic device, status information of the user of the electronic device, attribute information of a specified application in the electronic device, status information of the specified application, attribute information of the first service widget, and status information of the first service widget. In a possible manner, the second operation may include a sub-operation used to select the second service widget and a sub-operation used to select the third service widget. In another possible manner, the second operation may be used to select the third service widget. For example, the second operation may be an operation of tapping an icon that is in the first service widget and that corresponds to a third application. In this manner, the second service widget may be the same as the first service widget, or the second service widget and the first service widget may belong to a same application or the second service widget is a specified default service widget. When the user performs the second operation, the electronic device may determine the second service widget automatically and simultaneously.

In the method, the electronic device may determine, based on a user operation, the second service widget and the third service widget that are configured by the user and that are associated with the first service widget, or may automatically determine, based on pre-obtained scene information, the second service widget and the third service widget that are associated with the first service widget. Flexibility and practicability are high.

In a possible design, the first operation is a sliding operation performed on the first service widget, or the first operation is an operation performed on a first control on the first service widget, where the first control is used to trigger one service widget to be deformed and displayed as a plurality of service widgets.

In the method, an operation used to trigger deformation and display of the service widget, namely, the first operation, may be different types of operations. Therefore, flexibility and practicability are high, and this helps the user perform corresponding control based on an actual requirement.

In a possible design, before determining that the current scene meets the specified first condition, the method further includes: determining the first condition in response to a received third operation, where the third operation indicates the first condition. In the method, the electronic device may quickly and conveniently determine, based on the received operation, a trigger condition for performing deformation and display on the widget, namely, the first condition. Therefore, practicability is high.

In a possible design, the first condition includes at least one of the following: Specified time is reached, current time is in a specified time period, specified duration elapses, the electronic device is at a specified location, brightness of the space in which the electronic device is located is within a specified brightness range, the electronic device is in a screen-on state, the electronic device is in a state of being connected to another specified electronic device, a user associated with the electronic device is in a specified motion state, a size of the first service widget is a specified size, the first service widget is in a lock-screen display state, and the first service widget is in an always on display state. In the method, there may be a plurality of different options for setting the first condition, and flexibility and practicability are high.

In a possible design, after switching from displaying the first service widget to displaying the second service widget and the third service widget, the method further includes: when determining that a current scene meets a specified second condition and/or a fourth operation is received, switching from displaying the second service widget and the third service widget to displaying the first service widget; or when determining that a current scene meets a specified third condition and/or a fifth operation is received, switching from displaying the second service widget and the third service widget to displaying a fourth service widget, where the fourth service widget is associated with the second service widget, and the fourth service widget is associated with the third service widget.

In the method, after switching the first service widget to a plurality of service widgets associated with the first service widget, namely, the second service widget and the third service widget, the electronic device may further switch from displaying the plurality of service widgets back to displaying the first service widget. Alternatively, after switching the first service widget to a plurality of service widgets associated with the first service widget, namely, the second service widget and the third service widget, the electronic device may further switch from displaying the plurality of service widgets to displaying another associated service widget. According to the foregoing method, the service widgets can be flexibly switched and displayed with reference to a specific scene. Therefore, practicability is high, and this helps improve display effect of the service widget and efficiency of using the service widget.

In a possible design, after switching from displaying the second service widget and the third service widget to displaying the first service widget, the method further includes: when determining that a current scene meets a specified fourth condition and/or a sixth operation is received, switching from displaying the first service widget to displaying a fifth service widget and a sixth service widget, where the fifth service widget is associated with the first service widget, and the sixth service widget is associated with the first service widget.

In the foregoing method, after displaying the first service widget, the electronic device can switch and display different service widgets in different scenes, so that display efficiency of the service widget and efficiency of using the service widget can be improved, and the user can efficiently use different service widgets in different scenes. Therefore, the method has high practicability.

In a possible design, after switching from displaying the second service widget and the third service widget to displaying the first service widget, the method further includes: displaying a first interface in response to a received seventh operation, where the first interface includes at least one service widget associated with the first service widget, and the at least one service widget includes the third service widget; deleting the third service widget in the first interface in response to a received eighth operation, where the eighth operation indicates to remove an association relationship between the third service widget and the first service widget; or adding a seventh service widget to the first interface in response to a received ninth operation, where the ninth operation indicates to associate the seventh service widget with the first service widget.

In the method, the at least one service widget associated with the first service widget is the associated service widget of the first service widget. The electronic device may display a service widget editing interface, namely, the first interface, in response to a user operation, so that the user can configure the association relationship between the service widgets in the editing interface, for example, add or delete the associated service widget of the first service widget. The method has high practicability, and helps the user manually manage the association relationship between the service widgets.

In a possible design, after adding the seventh service widget to the first interface in response to the received ninth operation, the method further includes: displaying the first service widget in response to a received tenth operation; and when determining that a current scene meets a specified fifth condition and/or an eleventh operation is received, switching from displaying the first service widget to displaying the second service widget and the seventh service widget.

In the method, after the user edits the associated service widget of the first service widget, the electronic device may switch to and display, based on an edited association relationship between the first service widget and another service widget, a service widget that meets the association relationship, and further switch to and display the service widget based on the user's willingness. Therefore, experience and efficiency of using the service widget by the user can be improved.

In a possible design, the seventh operation is an operation performed on the first service widget; or the seventh operation is an operation performed on a second control on the first service widget, and the second control is used to trigger display of the first interface; or the seventh operation includes a first sub-operation and a second sub-operation, the first sub-operation indicates to display a third control, the third control is used to trigger display of the first interface, and the second sub-operation is an operation performed on the third control. In the method, the seventh operation may be decomposed into a plurality of simple sub-operations, and a function corresponding to the seventh operation may be jointly implemented through the plurality of simple sub-operations. This helps improve convenience of performing an operation by the user.

In a possible design, the eighth operation includes a third sub-operation and a fourth sub-operation, the third sub-operation indicates to display a fourth control, the fourth control is used to trigger removal of the association relationship between the third service widget and the first service widget, and the fourth sub-operation is an operation performed on the fourth control. In the method, the eighth operation may be decomposed into a plurality of simple sub-operations, and a function corresponding to the eighth operation can be jointly implemented through the plurality of simple sub-operations. This helps improve convenience of performing an operation by the user.

In a possible design, the ninth operation includes a fifth sub-operation and a sixth sub-operation, the fifth sub-operation is an operation performed on a fifth control, the fifth control is used to trigger display of at least one candidate service widget, and the sixth sub-operation is used to select the seventh service widget from the at least one candidate service widget. In the method, the ninth operation may be decomposed into a plurality of simple sub-operations, and a function corresponding to the ninth operation can be jointly implemented through the plurality of simple sub-operations. This helps improve convenience of performing an operation by the user.

In a possible design, after switching from displaying the first service widget to displaying the second service widget and the third service widget, the method further includes: adjusting a display location and/or a size of the second service widget and/or a display location and/or a size of the third service widget in response to a received twelfth operation. In the method, after switching to and displaying the service widget, the electronic device may further adjust a display format (which may include a display location and/or a size) of a switched service widget, to further improve display effect of the service widget.

According to a second aspect, an embodiment of this application provides an electronic device. The electronic device includes a display, a memory, and one or more processors, where the memory is configured to store computer program code, the computer program code includes computer instructions, and when the computer instructions are executed by the one or more processors, the electronic device is enabled to perform the method according to the first aspect or any one of the possible designs of the first aspect.

According to a third aspect, this application provides a computer-readable storage medium, where the computer-readable storage medium stores a computer program, and when the computer program is run on an electronic device, the electronic device is enabled to perform the method according to the first aspect or any one of the possible designs of the first aspect.

According to a fourth aspect, this application provides a computer program product, where the computer program product includes a computer program or instructions, and when the computer program or the instructions are run on an electronic device, the electronic device is enabled to perform the method according to the first aspect or any one of the possible designs of the first aspect.

According to a fifth aspect, this application provides a chip system. The chip system includes a processor and a memory, the memory stores instructions, and when the instructions are executed by the processor, the method according to the first aspect or any one of the possible designs of the first aspect is implemented. The chip system may include a chip or may include a chip and another discrete component.

For beneficial effect of the second aspect to the fifth aspect, refer to descriptions of beneficial effect of related content in the first aspect. Details are not described herein again.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3 is a diagram of a display method according to an embodiment of this application;
FIG. 4(a) and FIG. 4(b) are a diagram of related interfaces for service widget switching and display according to an embodiment of this application;
FIG. 5(a) and FIG. 5(b) are a diagram of related interfaces for service widget switching and display according to an embodiment of this application;
FIG. 6(a) and FIG. 6(b) are a diagram of related interfaces for service widget switching and display according to an embodiment of this application;
FIG. 7(a) and FIG. 7(b) are a diagram of related interfaces for service widget switching and display according to an embodiment of this application;
FIG. 8a(a) and FIG. 8a(b) are a diagram of related interfaces for service widget switching and display according to an embodiment of this application;
FIG. 8b(a) and FIG. 8b(b) are a diagram of display interfaces of service widgets according to an embodiment of this application;
FIG. 9(a) and FIG. 9(b) are a diagram of related interfaces for service widget switching and display according to an embodiment of this application;
FIG. 10a is a diagram of a display interface of a service widget according to an embodiment of this application;
FIG. 10b is a diagram of a display interface of service widgets according to an embodiment of this application;
FIG. 10c is a diagram of a display interface of service widgets according to an embodiment of this application;
FIG. 11(a) and FIG. 11(b) are a diagram of related interfaces for service widget switching and display according to an embodiment of this application;
FIG. 12 is a schematic flowchart of a service widget switching and display method according to an embodiment of this application;
FIG. 13(a) and FIG. 13(b) are a diagram of related interfaces for configuring service widgets according to an embodiment of this application;
FIG. 14 is a diagram of a widget association configuration interface according to an embodiment of this application;
FIG. 15(a) and FIG. 15(b) are a diagram of related interfaces for deleting an associated service widget according to an embodiment of this application;
FIG. 16 is a diagram of a widget editing interface according to an embodiment of this application;
FIG. 17 is a diagram of an architecture of a possible recommendation system according to an embodiment of this application;
FIG. 18 is a schematic flowchart of a service widget switching and display method according to an embodiment of this application;
FIG. 19 is a diagram of a display method according to an embodiment of this application; and
FIG. 20 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to accompanying drawings.

Terms "first" and "second" below in description of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, concepts related to this application are described for reference by using examples.
(1) An electronic device may be a device having a display function. In some embodiments of this application, the electronic device may be a portable device, for example, a mobile phone, a tablet computer, a wearable device having a wireless communication function, a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television), a smart robot, a workshop device, a wireless terminal in self driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, an uncrewed aerial vehicle, or an airplane).

In some embodiments of this application, the electronic device may alternatively be a portable terminal device that further includes another function. An example embodiment of the portable terminal device includes but is not limited to a portable terminal device using Android^{®} or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

(2) A feature ability (FA), also referred to as an atomic service, is a new application form that has an independent entry, is installation-free, and can provide one or more convenient services for a user. The one or more convenient services may be services in an application. The feature ability may be used to interact with the user, and may be used by the user in a proper scene and on a proper device.

A service widget is an interface display form of the feature ability, and can display, in a form of a widget, important information, operations, or page content of the feature ability (or application) on a home screen. A core concept of the service widget is to provide intuitive and easy-to-use information content for the user, so that direct service access and layer jumping reduction can be implemented through lightweight interaction behavior of the user.

It should be understood that in embodiments of this application, "at least one" means one or more, and "a plurality of" means two or more. A term "and/or" describes an association relationship between associated objects, and indicates that three relationships may exist. For example, A and/or B may indicate the following cases: Only A exists, both A and B exist, and only B exists, where A and B may be singular or plural. A character "/" usually indicates an "or" relationship between the associated objects. "At least one of the following items (pieces)" or a similar expression thereof means any combination of the items, and includes a single item (piece) or any combination of a plurality of items (pieces). For example, at least one (piece) of a, b, or c may indicate: a, b, c, a and b, a and c, b and c, or a, b and c, where a, b, and c may be singular or plural.

To improve efficiency of using a service widget, embodiments of this application provide a display method and an electronic device. In this solution, associated display and use of service widgets can be implemented, and switching and use between different service widgets can be quickly and conveniently implemented. Therefore, display effect of the service widget can be improved, the efficiency of using the service widget is significantly improved, and user experience is improved.

The solutions provided in embodiments of this application may be applied to a service widget display scene, and may be performed by any electronic device that supports service widget display.

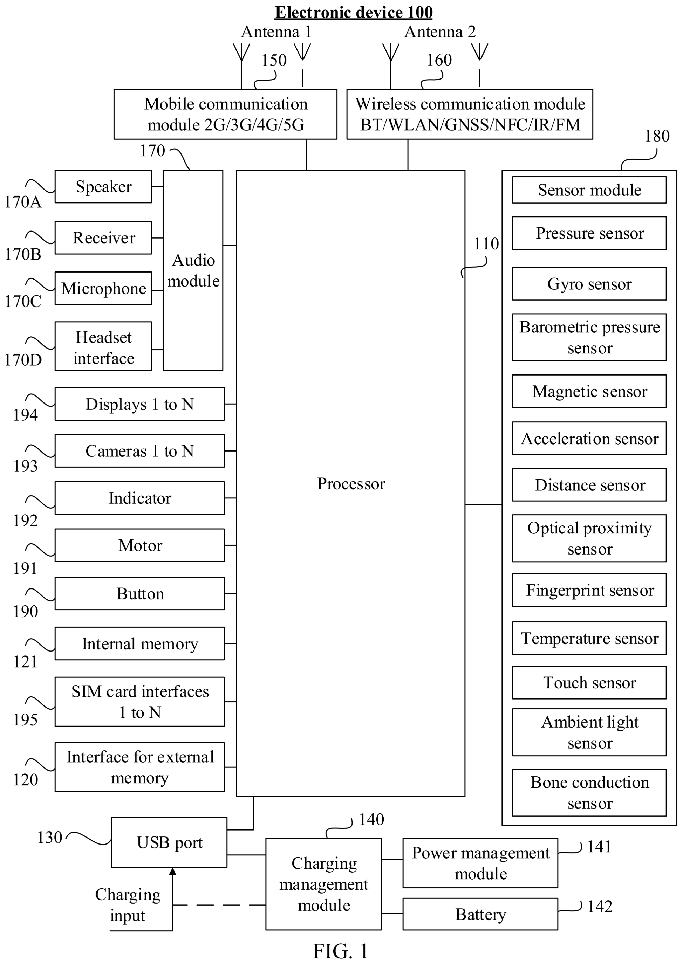

The following describes, with reference to FIG. 1, a structure of an electronic device to which the solutions provided in embodiments of this application are applicable.

As shown in FIG. 1, the electronic device 100 may include a processor 110, an interface 120 for external memory, an internal memory 121, a USB port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, an SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or a combination of two or more components, or an arrangement of different components. The components shown in FIG. 1 may be implemented by hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

Execution of the display method provided in embodiments of this application may be completed by the processor 110 by controlling or invoking another component. For example, a processing program in embodiments of this application stored in the internal memory 121 is invoked, or a processing program in embodiments of this application stored in a third-party device is invoked by using the interface 120 for external memory, to control the wireless communication module 160 to perform data communication with another device, so as to improve intelligence and convenience of the electronic device 100 and improve user experience. The processor 110 may include different components. For example, when a CPU and a GPU are integrated, the CPU and the GPU may cooperate to perform the display method provided in embodiments of this application. For example, in the display method, some algorithms are executed by the CPU, and some other algorithms are executed by the GPU, to achieve high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by a user or information provided for the user and various graphical user interfaces (graphical user interface, GUI). For example, the display 194 may display a photo, a video, a web page, a file, or the like. For another example, the display 194 may display the service widget in embodiments of this application, another interface including the service widget, or the like.

In this embodiment of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element, for example, a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, code of an application (for example, a function corresponding to the solution of this application), and the like. The data storage area may store data created during use of the electronic device 100, and the like.

The internal memory 121 may further store one or more computer programs corresponding to the algorithms in the solutions of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, and may further include a nonvolatile memory, for example, at least one magnetic disk storage device, a flash memory, or a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application stored in the external memory.

The sensor module 180 may include a gyro sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 form a touchscreen, which is also referred to as a "touchscreen". The touch sensor is configured to detect a touch operation performed on or near the touch sensor. The touch sensor may transfer a detected touch operation to the application processor, to determine a type of a touch event. A visual output related to the touch operation may be provided on the display 194. In some other embodiments, the touch sensor may alternatively be disposed on a surface of the electronic device 100, and is in a position different from that of the display 194.

For example, the display 194 of the electronic device 100 may display a home screen (or referred to as a main interface). The home screen may include a service widget, for example, a service widget of a camera, and may further include an application icon and the like. For example, a user may tap the service widget of the camera on the home screen by using the touch sensor, to trigger the processor 110 to start the camera application and start the camera 193. The display 194 may be switched to display an interface of the camera application, for example, a viewfinder interface.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110. In this embodiment of this application, the mobile communication module 150 may be further configured to: exchange information with another device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio apparatus (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the wireless communication module 160 is configured to establish a connection to another electronic device to perform data exchange. Alternatively, the wireless communication module 160 may be configured to access an access point device, send a control instruction to another electronic device, or receive data sent by another electronic device.

In addition, the electronic device 100 may implement an audio function, for example, music playing and recording, through the audio module 170, the speaker 170A, the receiver 170B, the microphone 170C, the headset jack 170D, the application processor, and the like. The electronic device 100 may receive an input from the button 190, and generate a button signal input related to a user setting and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to an SIM card. The SIM card may be inserted into the SIM card interface 195 or removed from the SIM card interface 195, to implement contact with or separation from the electronic device 100.

It should be understood that, in actual application, the electronic device 100 may include more or fewer components than those shown in FIG. 1. This is not limited in embodiments of this application. The electronic device 100 shown in the figure is merely an example, and the electronic device 100 may have more or fewer components than those shown in the figure, or a combination of two or more components, or an arrangement of different components. The components shown in the figure may be implemented by hardware including one or more signal processing and/or application-specific integrated circuits, software, or a combination of hardware and software.

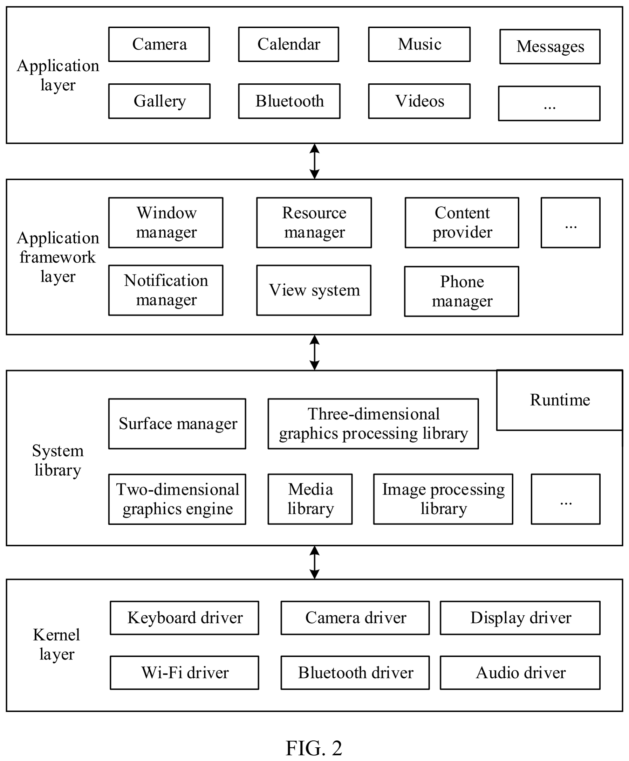

A software system of the electronic device 100 may use a layered architecture, an event-driven architecture, a microkernel architecture, a micro service architecture, or a cloud architecture. In the layered architecture, software is divided into several layers, and each layer has a clear role and task. The layers communicate with each other through a software interface. For example, as shown in FIG. 2, the software architecture may be divided into four layers: an application layer, an application framework (framework, FWK) layer, a runtime and system library, and a (Linux) kernel (kernel) layer from top to bottom.

The application layer is an uppermost layer of the operating system, includes native applications of the operating system such as Camera, Gallery, Calendar, Bluetooth, Music, Videos, and Messages, and may further include a third-party application. An application program in embodiments of this application is briefly referred to as an application (application, APP), and is a software program that can implement one or more specific functions. Usually, a plurality of applications may be installed on the electronic device, for example, a camera application and a gallery application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, an application may be developed by using a Java language, and is completed by invoking an application programming interface (application programming interface, API) provided by the application framework layer. A developer may interact with a bottom layer (for example, the kernel layer) of the operating system through the application framework layer, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage a window program. The window manager may obtain a display size, determine whether there is a status bar, lock a display (or a screen), take a screenshot, and the like.

The content provider is configured to: store and obtain data, and enable the data to be accessed by an application. The data may include information, for example, a file (for example, a document, a video, an image, or an audio) and text.

The view system includes visual controls, for example, controls that display content, for example, text, pictures, and documents. The view system may be configured to construct an application. An interface in a display window may include one or more views. For example, a display interface including an SMS message notification icon may include a text display view and a picture display view.

The phone manager is configured to provide a communication function of the electronic device. The notification manager enables an application to display notification information in a status bar, and may be configured to convey a notification message. The notification manager may automatically disappear after a short pause without user interaction.

The runtime includes a core library and a virtual machine. The runtime is responsible for scheduling and management of the system.

The core library of the system includes two parts: a function that needs to be invoked by using the Java language, and a core library of the system. The application layer and the application framework layer run on the virtual machine. Java is used as an example. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording of audios and videos in a plurality of commonly used formats, static image files, and the like. The media library can support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and a software stack. The layer has many drivers related to the electronic device, mainly including a display driver, a driver of a keyboard used as an input device, a flash driver that is based on a memory technology device, a camera driver, an audio driver, a Bluetooth driver, a Wi-Fi driver, and the like.

It should be understood that the function service described above is merely an example. In actual application, the electronic device may alternatively be divided into more or fewer function services based on other factors, or may be divided into functions of each service in another manner, or may not be divided into function services, but operates as a whole.

The following describes in detail the solutions provided in this application with reference to specific embodiments.

First part: deformation and display of service widgets

In some embodiments of this application, after displaying a service widget, an electronic device may switch the service widget to a plurality of associated service widgets in a specific scene. According to the method, one service widget can be quickly deformed into a plurality of service widgets that are displayed in combination, to implement associated display and use of the service widgets. The plurality of service widgets are associated service widgets of the first service widget.

The following describes the method provided in embodiments of this application by using, as an example, a scene in which one service widget is deformed into two service widgets that are displayed in combination. For a method for deforming one service widget into more service widgets that are displayed in combination, refer to the following content. Details are not described in embodiments of this application.

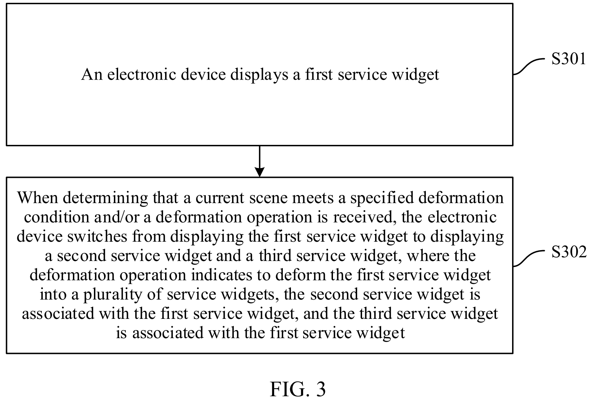

Refer to FIG. 3. A display method provided in an embodiment of this application may include the following steps.

S301: An electronic device displays a first service widget.

The first service widget may belong to a first application. It may also be understood that the first service widget is a service widget related to the first application.

Optionally, the first service widget may be a service widget corresponding to at least one function (in this embodiment of this application, the function may also be understood as a service or a function service) of the first application and/or a service widget corresponding to at least one application interface of the first application. The first service widget may be used to start the at least one function of the first application and/or trigger display of the at least one application interface of the first application. A user may perform an operation on the first service widget, to trigger the electronic device to execute the function corresponding to the first service widget or display the corresponding application interface. Alternatively, the first service widget may include a control corresponding to each of the at least one function of the first application, and/or an icon corresponding to each of the at least one application interface of the first application. The user may perform an operation on any control in the first service widget, to trigger the electronic device to execute a function corresponding to the control. The user may perform an operation on any icon in the first service widget, to trigger the electronic device to display an application interface corresponding to the icon. Optionally, when performing any function, the electronic device may display an application interface corresponding to the function. Optionally, the application interface corresponding to the function may be an application interface corresponding to the first service widget.

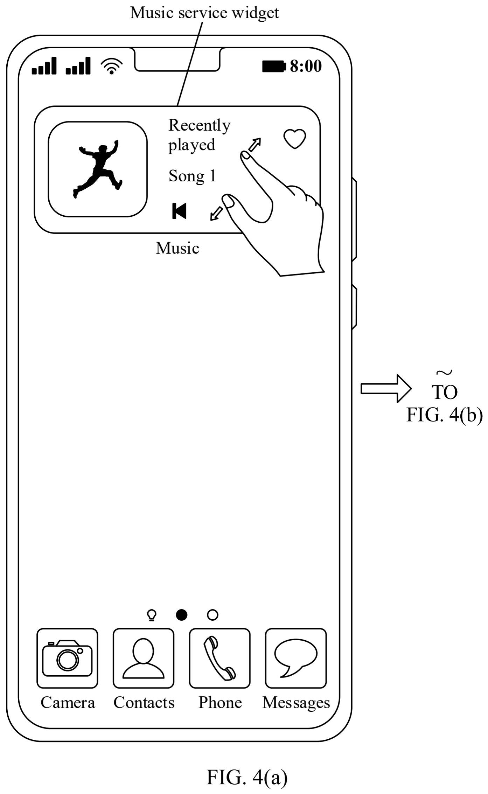

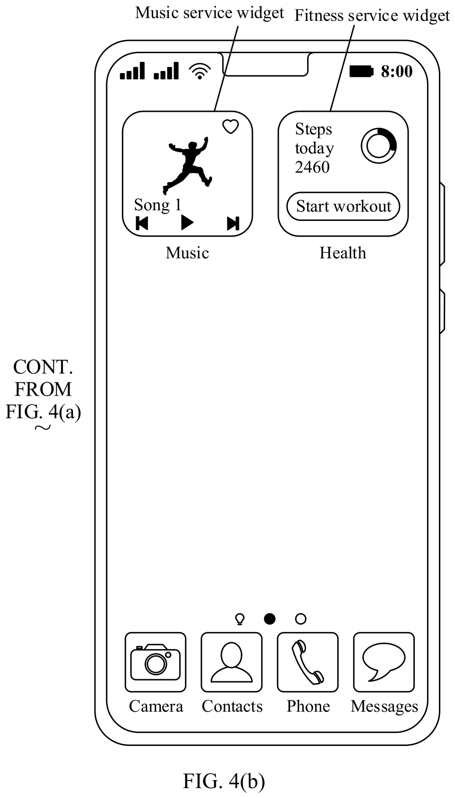

For example, the first service widget may be a music service widget shown in FIG. 4(a) or a music service widget shown in FIG. 4(b), and the music service widget may correspond to a music play control function and/or a music play interface of a music application. The user may tap the music service widget to trigger the electronic device to display the music play interface of the music application. The user may tap a control in the music service widget, to trigger the electronic device to perform a corresponding music control function.

In some embodiments of this application, the electronic device may display the first service widget after creating the first service widget in response to a user operation. Optionally, a size of the first service widget may be a specified size.

S302: When determining that a current scene meets a specified deformation condition and/or a deformation operation is received, the electronic device switches from displaying the first service widget to displaying a second service widget and a third service widget, where the deformation operation indicates to deform the first service widget into a plurality of service widgets, the second service widget is associated with the first service widget, and the third service widget is associated with the first service widget.

The second service widget is different from the third service widget. The second service widget and the third service widget are associated service widgets of the first service widget.

In some embodiments of this application, when determining that the current scene meets the deformation condition, the electronic device may switch from displaying the first service widget to displaying the second service widget and the third service widget. Alternatively, in response to the received deformation operation, the electronic device may switch from displaying the first service widget to displaying the second service widget and the third service widget. Alternatively, when determining that the current scene meets the deformation condition and the deformation operation is received, the electronic device may switch from displaying the first service widget to displaying the second service widget and the third service widget.

The following separately describes the second service widget and the third service widget in detail.

In some embodiments of this application, the second service widget may be any one of the following:

### (1) First service widget whose display form is switched

In this manner, functions and/or application interfaces corresponding to the first service widget and the second service widget may be completely the same. In this manner, both the first service widget and the second service widget belong to the first application.

For example, the first service widget may be the music service widget shown in FIG. 4(a), and the second service widget may be the service widget shown in FIG. 4(b).

Optionally, the second service widget may be the first service widget whose size is increased or decreased.

(2) Service widget corresponding to the at least one function of the first application and/or service widget corresponding to the at least one application interface of the first application

In this manner, the functions and/or the application interfaces corresponding to the first service widget and the second service widget may be completely different or partially the same. In this manner, both the first service widget and the second service widget belong to the first application.

Specifically, the function corresponding to the second service widget may be different from the function corresponding to the first service widget, or the function corresponding to the second service widget and the function corresponding to the first service widget may have at least one same function. The application interface corresponding to the second service widget may be different from the application interface corresponding to the first service widget, or the application interface corresponding to the second service widget and the application interface corresponding to the first service widget may have at least one same interface.

(3) Service widget corresponding to at least one function of a second application and/or service widget corresponding to at least one application interface of the second application

In this manner, the first service widget and the second service widget belong to different applications.

Optionally, the second application may be any associated application of the first application.

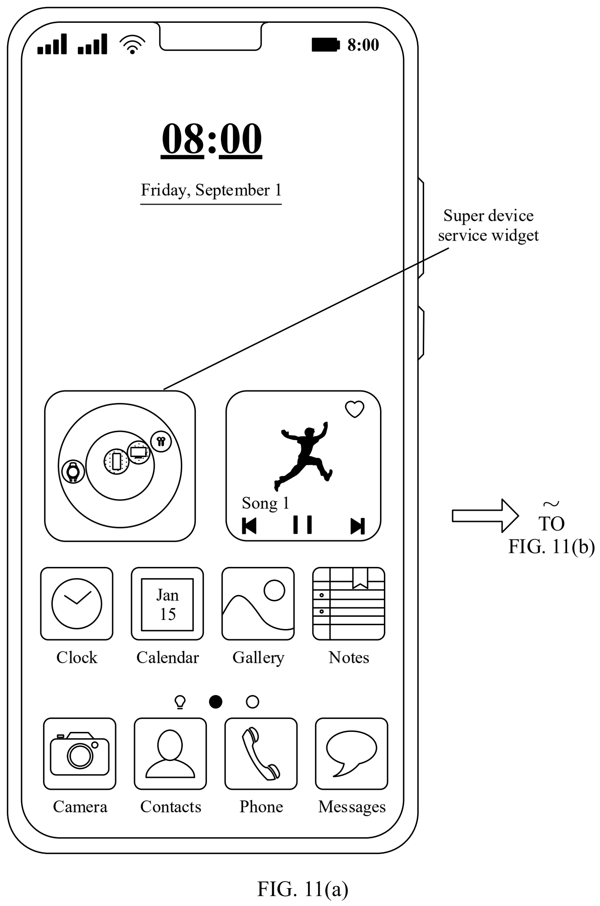

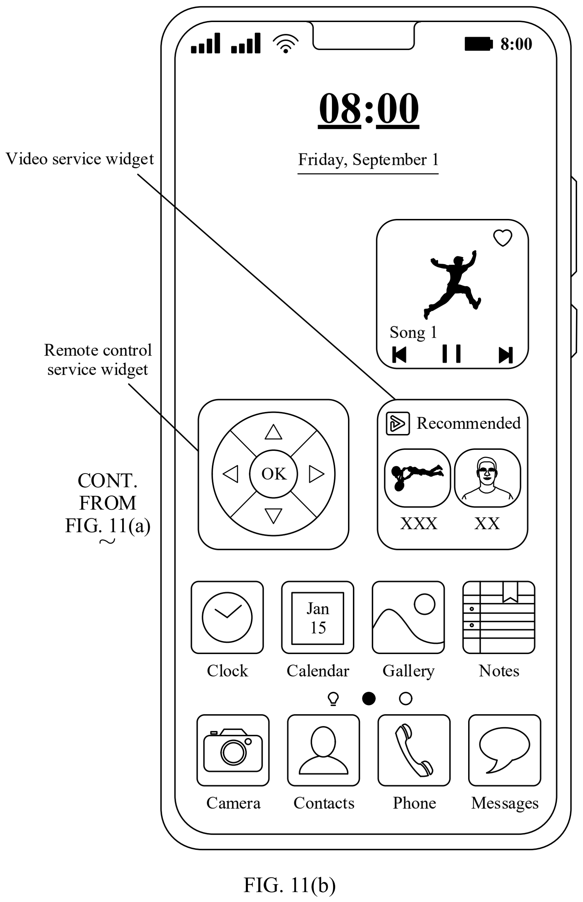

For example, the first service widget may be a super device service widget shown in FIG. 11(a), and the second service widget may be a remote control service widget shown in FIG. 11(b).

For another example, the first service widget may be the super device service widget shown in FIG. 11(a), and the second service widget may be a video service widget shown in FIG. 11(b).

(4) Service widget completely the same as the first service widget

In this manner, it may be considered that the second service widget is the first service widget.

In some embodiments of this application, a specific type of the second service widget may be preconfigured by the user, or may be indicated in real time when the user indicates to deform one service widget into a plurality of service widgets. The electronic device may determine the second service widget based on information preconfigured by the user or information indicated by the user in real time. When the user does not preconfigure the second service widget and does not indicate the second service widget in real time, the electronic device may use a default service widget as the second service widget, or the electronic device may automatically determine a service widget recommended to the user and use the service widget as the second service widget. The default service widget may be the first service widget that is deformed and displayed or a service widget that is completely the same as the first service widget. For a method for automatically determining, by the electronic device, a service widget recommended to the user, refer to the following method. Details are not described herein.

In some embodiments of this application, the third service widget may be a service widget corresponding to at least one function of a third application and/or a service widget corresponding to at least one application interface of the third application.

For example, the first service widget may be the super device service widget shown in FIG. 11(a), and the third service widget may be the video service widget shown in FIG. 11(b).

For another example, the first service widget may be the super device service widget shown in FIG. 11(a), and the third service widget may be the remote control service widget shown in FIG. 11(b).

Optionally, the third application may be any associated application of the first application.

Optionally, the third application and the second application may be a same application, or may be different applications. Functions and/or application interfaces corresponding to the second service widget and the third service widget are different.

In some embodiments of this application, the third service widget may be preconfigured by the user, or may be indicated in real time when the user indicates to deform one service widget into a plurality of service widgets. The electronic device may determine the third service widget based on information preconfigured by the user or information indicated by the user in real time. When the user does not preconfigure the third service widget and does not indicate the third service widget in real time, the electronic device may automatically determine a service widget recommended to the user and use the service widget as the third service widget. The service widget is different from the second service widget.

In some embodiments of this application, in an optional implementation, when automatically determining a service widget recommended to the user, the electronic device may use, as the service widget recommended to the user, a service widget ranked first in at least one service widget associated with the first service widget. The at least one service widget may be sorted in descending order of association degrees with the first service widget, or may be sorted according to another rule. This is not specifically limited in embodiments of this application. In another optional implementation, when automatically determining the service widget recommended to the user, the electronic device may use, as the service widget recommended to the user, a service widget that meets a specified condition and that is in the at least one service widget associated with the first service widget. The specified condition may be, for example, belonging to a same type or a same application as the first service widget. This is not specifically limited in embodiments of this application.

Optionally, in a scene in which both the second service widget and the third service widget are service widgets that are automatically determined by the electronic device and that are recommended to the user, the electronic device may first select, according to the foregoing method as the second service widget, a service widget from the at least one service widget associated with the first service widget, and then select, according to the foregoing method as the third service widget, a service widget from service widgets other than the second service widget in the at least one service widget.

The at least one service widget associated with the first service widget in the foregoing method may be preset by the user, or may be automatically determined by the electronic device. For a specific determining method, refer to a method described in the following second part. Details are not described herein.

In some embodiments of this application, a size of the second service widget may be a specified size, and a size of the third service widget may be a specified size. The sizes of the second service widget and the third service widget may be the same or may be different.

In some embodiments of this application, display areas of the second service widget and the third service widget do not overlap, or the second service widget covers a part of an area of the third service widget, or the third service widget covers a part of an area of the second service widget. Optionally, in the foregoing three manners, after displaying the second service widget and the third service widget in any one of the manners, the electronic device may further automatically switch, under a specific condition, to display the second service widget and the third service widget in either of the other two manners, or switch, in response to a user operation, to display the second service widget and the third service widget in either of the other two manners.

In some embodiments of this application, the deformation condition may be preset by the user, or may be automatically determined by the electronic device.

In some embodiments of this application, the deformation condition may be related to at least one of feature information such as a time feature, a spatial feature, an attribute feature of the electronic device, a status feature of the electronic device, an attribute feature of the user, a status feature of the user, an attribute feature of the service widget, a display status feature of the service widget, an attribute feature of the application, and a status feature of the application. For example, the time feature may be time-related information such as current specific time and a current time period. The spatial feature may be a feature of a spatial environment in which the electronic device or a user associated with the electronic device is located, for example, information such as a spatial location, ambient light intensity, ambient humidity, an ambient temperature, and an environment type (for example, indoor or outdoor). The attribute feature of the electronic device may be some feature information of the electronic device, for example, software and hardware configuration information such as a size of a display of the electronic device. The status feature of the electronic device may include running or display-related status information such as a lock-screen state, a screen-on state, and an always on display (always on display, AOD) (or referred to as screen-off display, all-day display, or the like) layout state, and may further include related information such as a connection status or a communication status between the electronic device and another electronic device. The attribute feature of the user may be feature information of the user associated with the electronic device, for example, information such as an age, a gender, and a behavior habit feature of the user. The status feature of the user may be feature information related to a current status of the user, for example, a motion state or a stationary state. The attribute feature of the service widget may be feature information of the service widget, for example, a size and a type of the service widget. The display status feature of the service widget may be display-related status information such as home screen display, lock-screen display, combined display, stacked display, and display time. The application may be an application to which the service widget belongs, an associated application of the application to which the service widget belongs, an application of another type, or the like. The attribute feature of the application may be feature information of the application such as an application type. The status feature of the application may be running-related status information such as foreground running, background running, and running time.

In some embodiments of this application, the deformation operation may be a gesture sliding operation performed on the display of the electronic device, or an operation performed on a related control displayed on the electronic device.

In a first possible solution, when the deformation operation is a gesture sliding operation performed on the display of the electronic device, the gesture sliding operation may be preset by the user, or may be preconfigured by the electronic device. For example, the gesture sliding operation may be an operation of sliding on a service widget by two fingers, so that the two fingers move away from each other. The two fingers may be, for example, a left thumb and a right thumb, a right thumb and a right index finger, a right index finger and a right middle finger, or the like. Certainly, the gesture sliding operation may alternatively be a sliding operation in another form. This is not specifically limited in embodiments of this application.

For example, the first service widget displayed on the electronic device is the music service widget shown in FIG. 4(a). As shown in FIG. 4(a), the deformation operation may be an operation of respectively sliding, by the user, the music service widget to two sides through a right thumb and a right index finger. In response to the received operation, the electronic device may switch from displaying the music service widget shown in FIG. 4(a) to displaying the music service widget (namely, the second service widget) and a fitness service widget (namely, the third service widget) shown in FIG. 4(b). In this way, switching from displaying the service widget of the music application to simultaneously displaying the service widget of the music application and the service widget of a fitness application is implemented.

In a second possible solution, when the deformation operation is an operation performed on a related control displayed on the electronic device, the deformation operation may be specifically an operation described in any one of the following manners:
(1) In a first possible manner, when displaying the first service widget, the electronic device may display, on the first service widget, a deformation display control used to trigger deformation of one service widget into a plurality of service widgets, and the electronic device may switch, in response to an operation of tapping the deformation display control by the user, from displaying the first service widget to displaying the second service widget and the third service widget. In this manner, the deformation operation may be the operation of tapping the deformation display control by the user. In this manner, the user can conveniently and quickly control deformation and display of the service widget, and the electronic device can efficiently perform deformation and display on the service widget.
(2) In a second possible manner, when displaying the first service widget, the electronic device may display, on the first service widget, a deformation display control corresponding to at least one service widget associated with the first service widget. The at least one service widget includes at least the third service widget, and a deformation display control corresponding to each of the at least one service widget may be used to trigger the first service widget to be deformed and displayed as the second service widget and the service widget. In this scene, the second service widget may be any service widget that belongs to the first application and that is described in the foregoing embodiment. In response to a deformation operation performed by the user on a deformation display control corresponding to the third service widget, the electronic device may switch from displaying the first service widget to displaying the second service widget and the third service widget. Optionally, in this manner, the deformation operation may be the operation of tapping, by the user, the deformation display control corresponding to the third service widget.

In this manner, the electronic device may deform and display one service widget (namely, the first service widget) as two service widgets (namely, the second service widget and the third service widget) expected by the user. An operation manner is simple, and user experience can be improved.

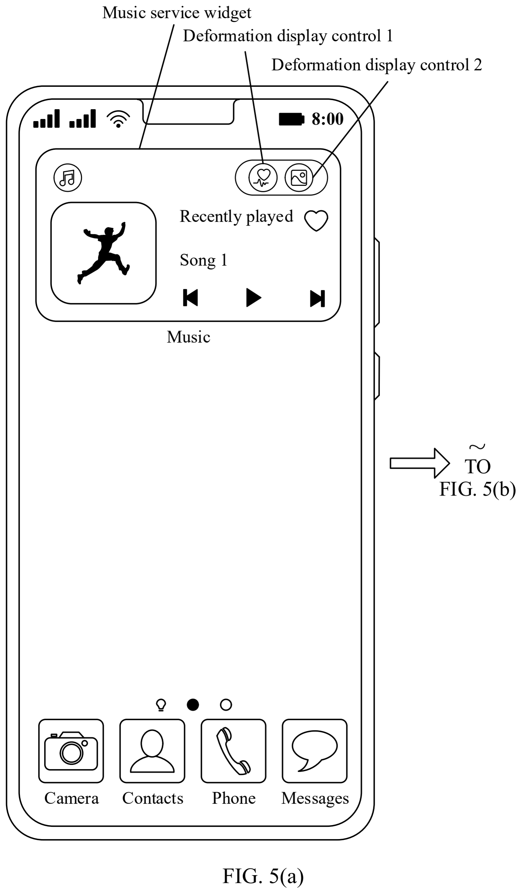

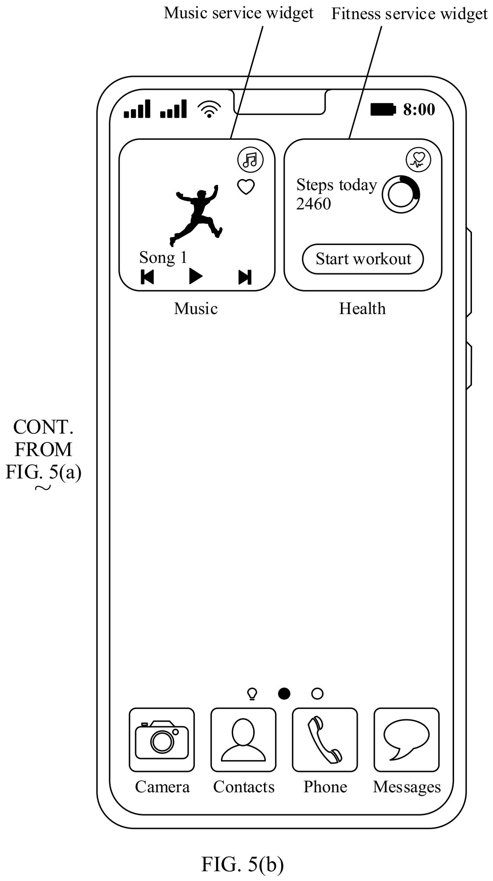

For example, the first service widget displayed on the electronic device is a music service widget shown in FIG. 5(a), and the music service widget may include a deformation display control 1 corresponding to a fitness service widget and a deformation display control 2 corresponding to a gallery service widget. In this scene, the deformation operation may be an operation of tapping the deformation display control 1 by the user. In response to the received deformation operation, the electronic device may switch from displaying the music service widget shown in FIG. 5(a) to displaying a music service widget (namely, the second service widget) and the fitness service widget (namely, the third service widget) shown in FIG. 5(b). In this way, switching from displaying the music service widget to simultaneously displaying the music service widget and the fitness service widget is implemented.

(3) In a third possible manner, when displaying the first service widget, the electronic device may display, on the first service widget, a deformation display control corresponding to at least one candidate application. A deformation display control corresponding to each of the at least one candidate application may be used to trigger the first service widget to be deformed and displayed as the second service widget and a service widget of the candidate application. In this scene, the second service widget may be any service widget that belongs to the first application and that is described in the foregoing embodiment. In an optional implementation, the electronic device may display a service widget selection interface in response to an operation of tapping, by the user, a deformation display control corresponding to any candidate application. The service widget selection interface may include an icon corresponding to at least one service widget of the any candidate application, and the electronic device may switch, in response to an operation of tapping any icon by the user, from displaying the first service widget to displaying the second service widget and a service widget (namely, the third service widget) corresponding to the icon tapped by the user. In the method, the deformation operation may be the operation of tapping, by the user, the deformation display control corresponding to the any candidate application and the operation of tapping the any icon in the service widget selection interface by the user. In another optional implementation, the electronic device may switch, in response to an operation of tapping, by the user, a deformation display control corresponding to any candidate application, from displaying the first service widget to displaying the second service widget and a service widget (namely, the third service widget) of the candidate application. The service widget of the candidate application may be a service widget automatically selected by the electronic device from at least one service widget of the candidate application. For a specific selection method, refer to the foregoing method for automatically determining, by the electronic device, the service widget recommended to the user. Details are not described herein. In the method, the deformation operation may be the operation of tapping, by the user, the deformation display control corresponding to the any candidate application.

The following separately describes a deformation and display process of the service widget in the foregoing method by using examples with reference to Embodiments 1 to 6 below.

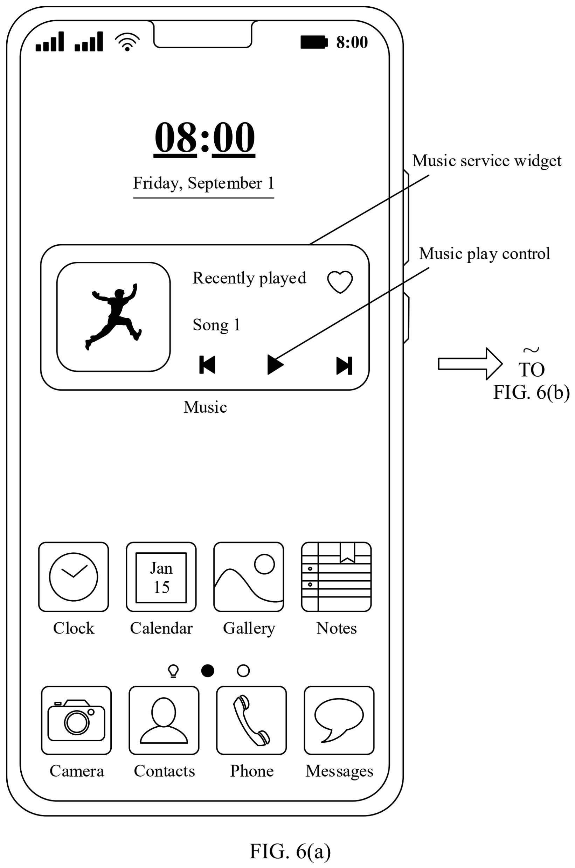

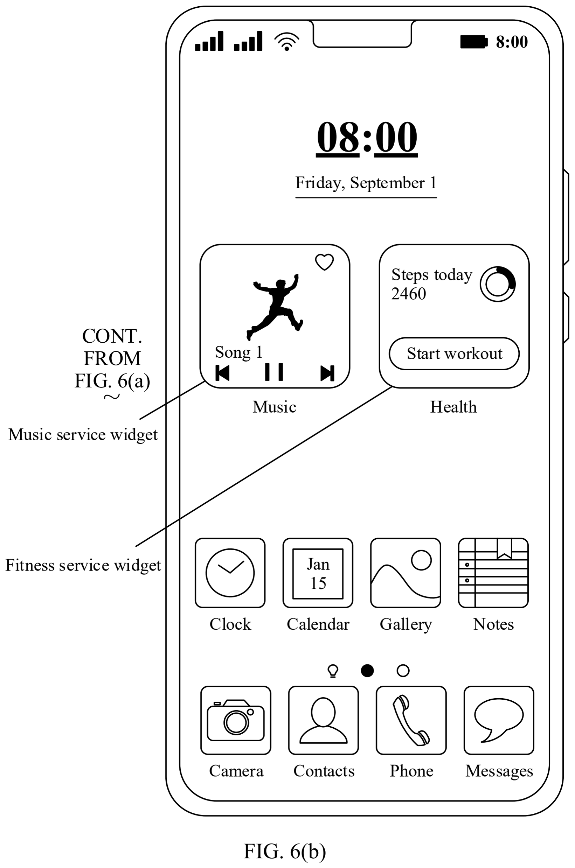

Embodiment 1: For example, the first application may be a music application, the first service widget may be a music service widget shown in FIG. 6(a), and a service widget associated with the music service widget may be a fitness service widget. As shown in FIG. 6(a), the music service widget may include a music play control, and the music play control may be used to control music playing. When the electronic device determines that current time is between 18:00 p.m. and 19:00 p.m., and receives an operation of tapping the music play control by a user, the electronic device may switch from displaying the music service widget shown in FIG. 6(a) to displaying a music service widget and a fitness service widget shown in FIG. 6(b), and display areas of the music service widget and the fitness service widget may not overlap. In this example, the deformation condition is that the current time is between 18:00 p.m. and 19:00 p.m., and the deformation operation is the operation of tapping the music play control in the music service widget by the user. In this example, the electronic device performs deformation and display on the service widget only when a current scene meets the deformation condition and the deformation operation is received. The second service widget is the music service widget shown in FIG. 6(b), and the third service widget is the fitness service widget shown in FIG. 6(b). In this scene, the second service widget is the first service widget that is deformed and displayed, and the third service widget and the first service widget belong to different applications.

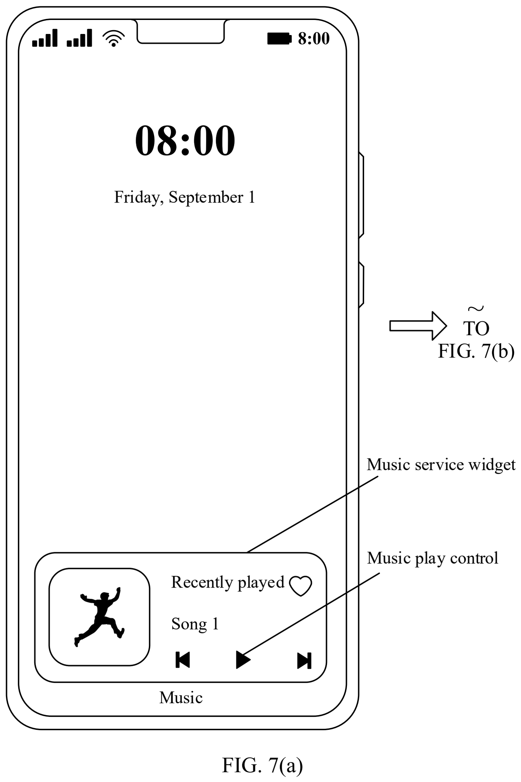

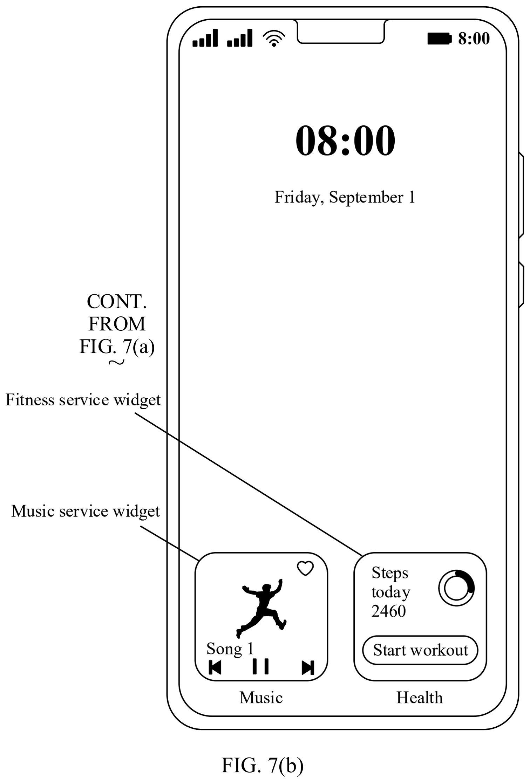

Embodiment 2: For example, the first application may be a music application, the first service widget may be a music service widget shown in FIG. 7(a), and a service widget associated with the music service widget may be a fitness service widget. As shown in FIG. 7(a), the music service widget is displayed in a lock-screen interface, the music service widget may include a music play control, and the music play control may be used to control music playing. When the electronic device determines that a current display status of the music service widget is a lock-screen display state, and receives an operation of tapping the music play control by a user, the electronic device may switch from displaying the music service widget shown in FIG. 7(a) to displaying a music service widget and a fitness service widget shown in FIG. 7(b), and display areas of the music service widget and the fitness service widget may not overlap. In this example, the deformation condition is that the music service widget is currently in the lock-screen display state, and the deformation operation is the operation of tapping the music play control in the music service widget by the user. In this example, the electronic device performs deformation and display on the service widget when a current scene meets the deformation condition and the deformation operation is received. The second service widget is the music service widget shown in FIG. 7(b), and the third service widget is the fitness service widget shown in FIG. 7(b). In this scene, the second service widget is the first service widget that is deformed and displayed, and the third service widget and the first service widget belong to different applications.

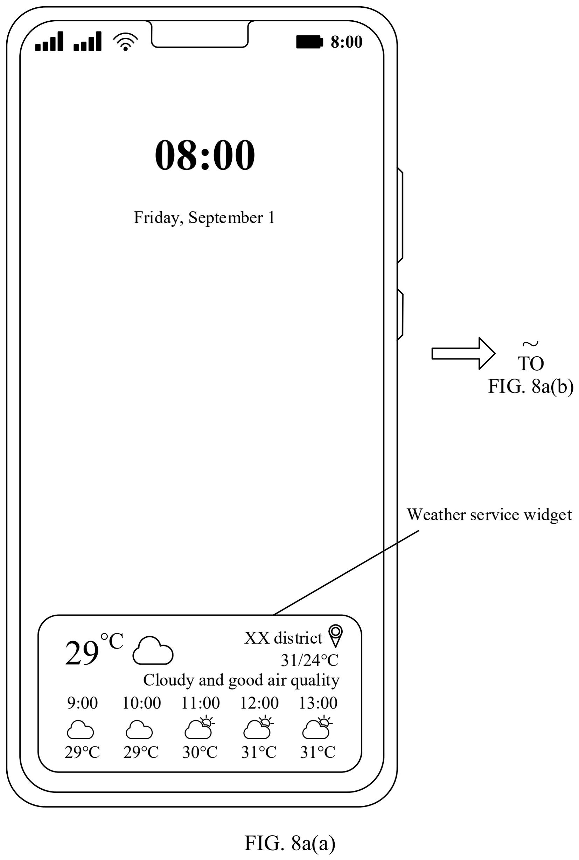

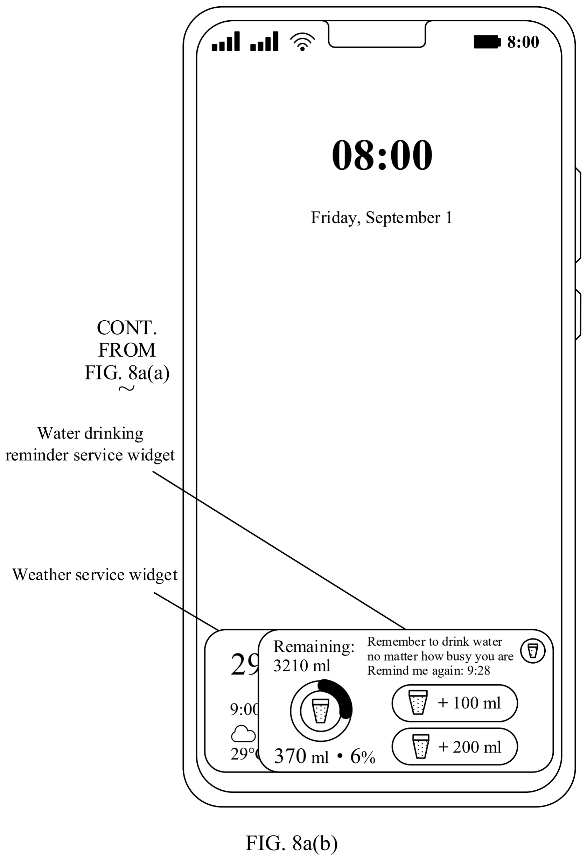

Embodiment 3: For example, the first application may be a weather application, the first service widget may be a weather service widget shown in FIG. 8a(a), and a service widget associated with the weather service widget may be a water drinking reminder service widget corresponding to a water drinking reminder function in an AI Life application. As shown in FIG. 8a(a), the weather service widget may be displayed in a lock-screen interface. When the electronic device determines that specified time is reached, the electronic device may switch from displaying the weather service widget shown in FIG. 8a(a) to displaying a weather service widget and a water drinking reminder service widget shown in FIG. 8a(b), and the water drinking reminder service widget may cover a part of an area of the weather service widget. In this example, the deformation condition is that the specified time is reached, and when determining that a current scene meets the deformation condition, the electronic device may perform deformation and display on the service widget. The second service widget is the weather service widget shown in FIG. 8a(b), and the third service widget is the water drinking reminder service widget shown in FIG. 8a(b). In this scene, the second service widget is the same as the first service widget, and the third service widget and the first service widget belong to different applications.

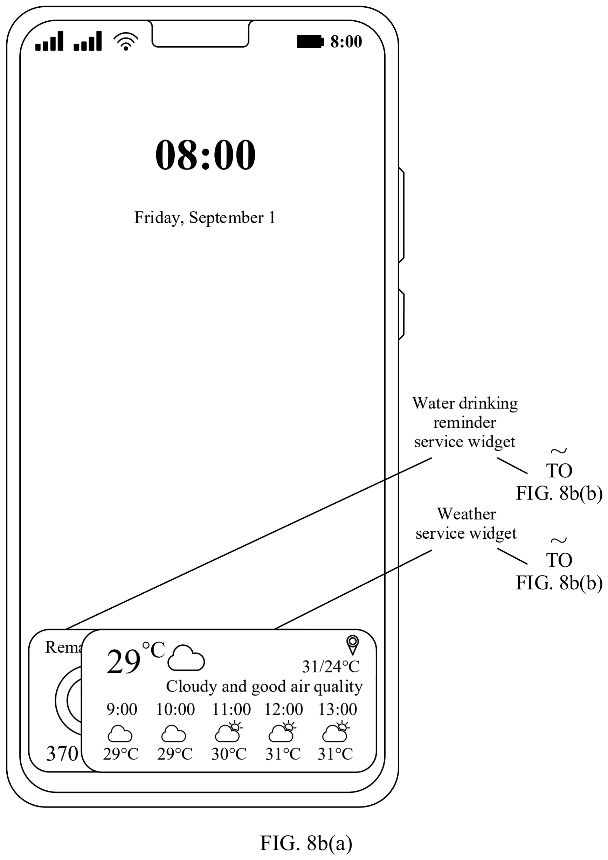

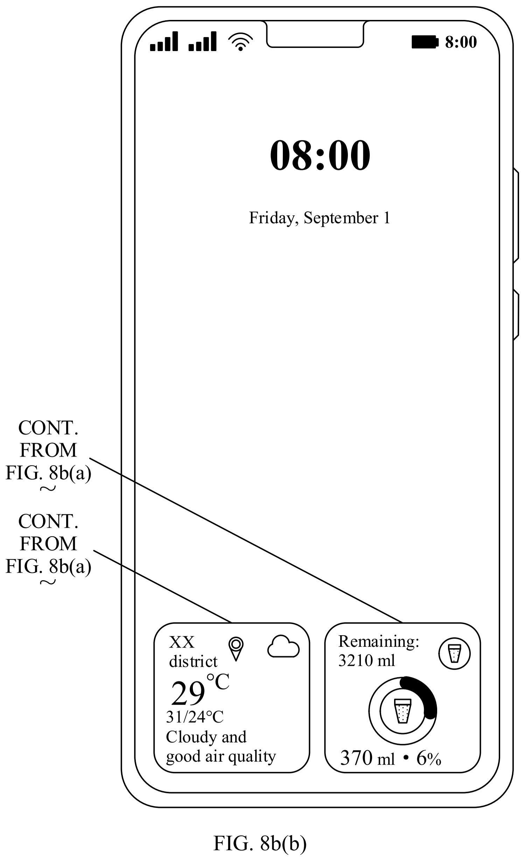

In the foregoing example, in FIG. 8a(b), the water drinking reminder service widget and the weather service widget are displayed in a manner in which the water drinking reminder service widget covers the part of the area of the weather service widget. In this scene, in an optional implementation, a user may perform an operation (for example, a sliding operation) on the water drinking reminder service widget and/or the weather service widget, to trigger the electronic device to implement page turning display of the water drinking reminder service widget and the weather service widget, so as to perform an operation on the service widget that the user is interested in. For example, after displaying the interface shown in FIG. 8a(b), the electronic device may switch, in response to a page turning operation (indicating to turn pages to display the water drinking reminder service widget and the weather service widget) performed by the user, from displaying the interface shown in FIG. 8a(b) to displaying an interface shown in FIG. 8b(a). In the interface, the weather service widget covers a part of an area of the water drinking reminder service widget. In this manner, after displaying the interface shown in FIG. 8b(a), the electronic device may further switch, in response to a page turning operation (indicating to turn pages to display the water drinking reminder service widget and the weather service widget) performed by the user, back to the interface shown in FIG. 8a(b). In another optional implementation, the user may perform an operation (for example, a sliding operation) on the water drinking reminder service widget and/or the weather service widget, to trigger the electronic device to separately display the second service widget and the third service widget in two areas that do not overlap each other. This makes it convenient for the user to simultaneously view different service widgets comprehensively and clearly. For example, after displaying the interface shown in FIG. 8a(b), the electronic device may switch, in response to an operation (indicating to separately display the water drinking reminder service widget and the weather service widget in areas that do not overlap each other) performed by the user, from displaying the interface shown in FIG. 8a(b) to displaying an interface shown in FIG. 8b(b). In the interface, display areas of the weather service widget and the water drinking reminder service widget do not overlap. In this manner, after displaying the interface shown in FIG. 8b(b), the electronic device may further switch, in response to an operation (indicating to display the water drinking reminder service widget and the weather service widget in a stacked manner) performed by the user, back to the interface shown in FIG. 8a(b).

Optionally, in the foregoing example, the electronic device may perform, in response to the user operation, switching and display between any two interfaces in the interface shown in FIG. 8a(b), the interface shown in FIG. 8b(a), and the interface shown in FIG. 8b(b).

Optionally, in the foregoing example, switching between different interfaces may alternatively be automatically performed by the electronic device, for example, may be automatically performed when the electronic device determines that a specified scene condition is met.

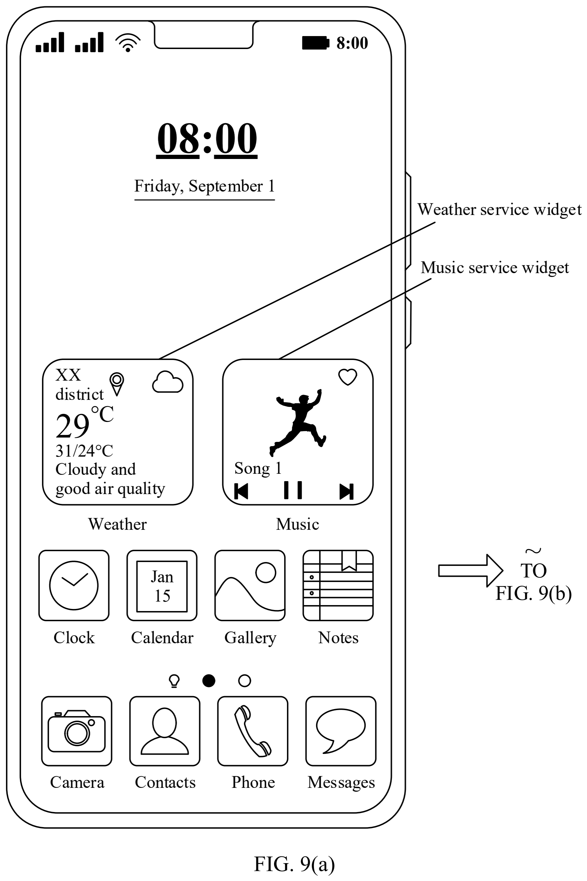

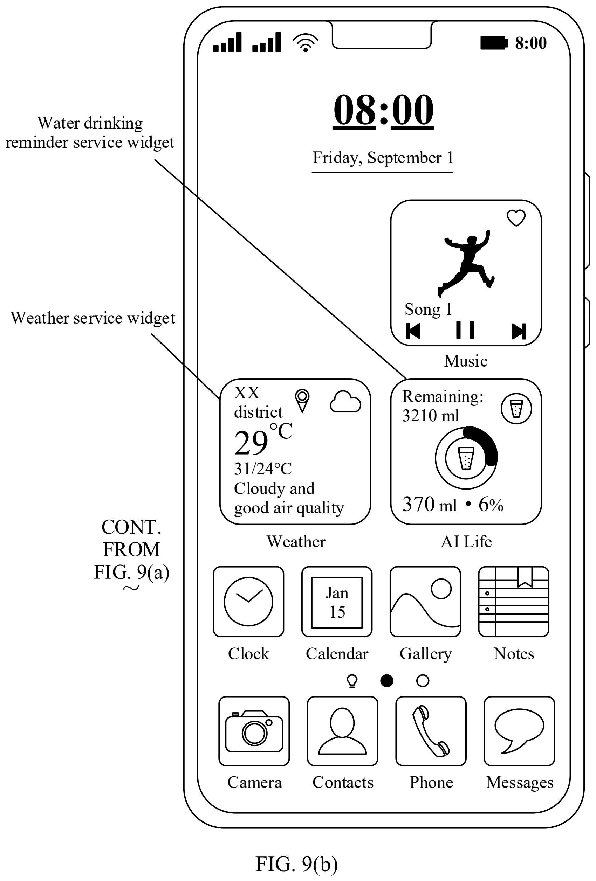

Embodiment 4: For example, the first application may be a weather application, the first service widget may be a weather service widget shown in FIG. 9(a), and a service widget associated with the weather service widget may be a water drinking reminder service widget corresponding to a water drinking reminder function in an AI Life application. When the electronic device receives a sliding operation performed on the weather service widget (for example, an operation of separately sliding, by a user, the weather service widget to two sides through a right thumb and a right index finger), the electronic device may switch from displaying the weather service widget shown in FIG. 9(a) to displaying a weather service widget and a water drinking reminder service widget shown in FIG. 9(b). In a process of performing deformation and display on the service widget, the electronic device may flexibly adjust a display location of another service widget (for example, a music service widget shown in FIG. 9(a)) that is irrelevant to deformation and display. In this example, the deformation operation is the sliding operation performed on the weather service widget. When receiving the deformation operation, the electronic device may perform deformation and display on the service widget. The second service widget is the weather service widget shown in FIG. 9(b), and the third service widget is the water drinking reminder service widget shown in FIG. 9(b). In this scene, the second service widget is the same as the first service widget, and the third service widget and the first service widget belong to different applications.

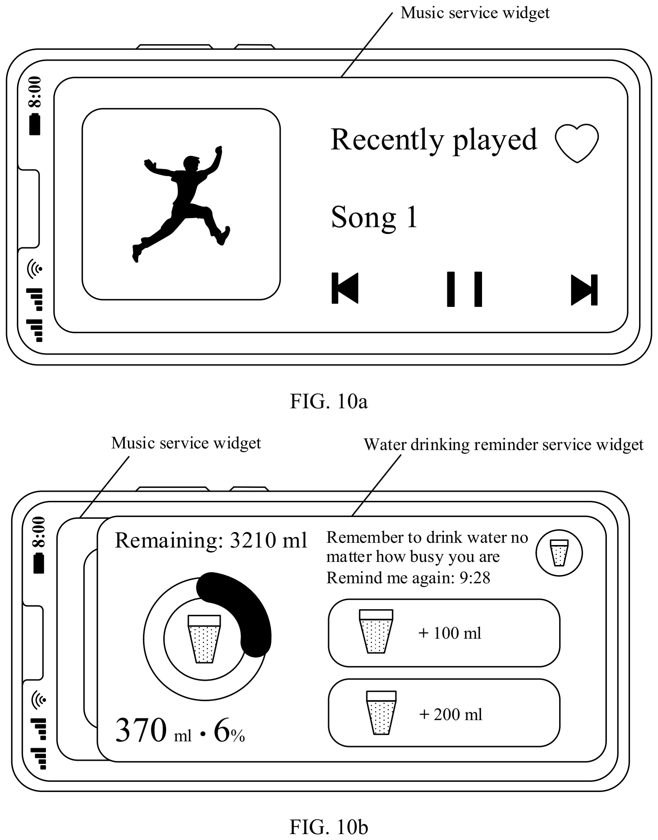

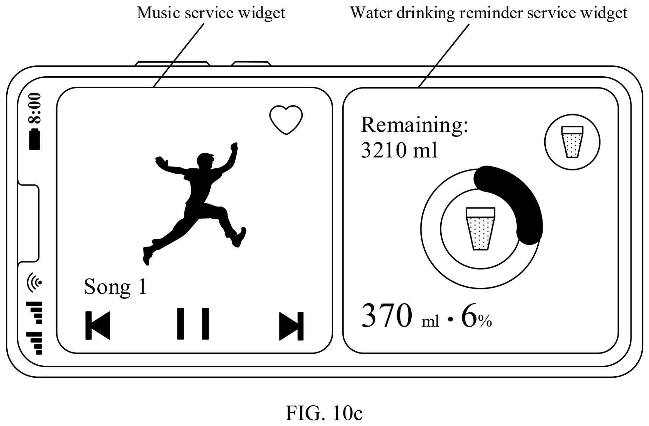

Embodiment 5: For example, the first application may be a music application, the first service widget may be a music service widget displayed in an AOD layout manner shown in FIG. 10a, and a service widget associated with the music service widget may be a water drinking reminder service widget corresponding to a water drinking reminder function in an AI Life application. When the electronic device determines that specified time is reached, the electronic device may switch from displaying the music service widget shown in FIG. 10a to displaying a music service widget and a water drinking reminder service widget shown in FIG. 10b or FIG. 10c, the water drinking reminder service widget in FIG. 10b covers a part of an area of the music service widget, and display areas of the water drinking reminder service widget and the music service widget in FIG. 10c do not overlap. In this example, the deformation condition is that the specified time is reached. When determining that a current scene meets the deformation condition, the electronic device may perform deformation and display on the service widget. The second service widget is the music service widget shown in FIG. 10b, and the third service widget is the water drinking reminder service widget shown in FIG. 10b; or the second service widget is the music service widget shown in FIG. 10c, and the third service widget is the water drinking reminder service widget shown in FIG. 10c.

Embodiment 6: For example, the electronic device may be a mobile phone, the first application may be a settings application, and the first service widget may be a super device service widget (namely, a service widget corresponding to a super device function in the settings application) shown in FIG. 11(a). The super device service widget includes a mobile phone icon, and may further include an icon of at least one other electronic device that can be connected to the mobile phone, for example, a smart screen icon, a smart watch icon, or a headset icon. The electronic device may establish a connection to a smart screen in response to an operation of dragging, by a user, the smart screen icon in the first service widget to collide with the mobile phone icon, and may switch from displaying the super device service widget shown in FIG. 11(a) to displaying a remote control service widget and a video service widget shown in FIG. 11(b). In this way, the user can control video playing on the smart screen by using the remote control service widget and the video service widget. In this example, the deformation operation may be the operation of dragging, by the user, the smart screen icon in the first service widget to collide with the mobile phone icon, and the deformation condition may be connecting to the smart screen. When determining that the deformation operation is received and/or determining that the deformation condition is met, the electronic device may perform deformation and display on the service widget. The second service widget may be the remote control service widget shown in FIG. 11(b), and the third service widget may be the video service widget shown in FIG. 11(b); or the second service widget may be the video service widget shown in FIG. 11(b), and the third service widget may be the remote control service widget shown in FIG. 11(b). In this scene, the second service widget and the first service widget belong to different applications, and the third service widget and the first service widget belong to different applications.

It should be noted that Embodiments 1 to 6 above provide some specific application scenarios and implementations to which the solutions of this application are applicable, but Embodiments 1 to 6 above do not limit the application scenarios and the implementations to which the solutions of this application are applicable. Other application scenarios and corresponding specific implementations may be implemented with reference to the methods provided in the foregoing embodiments, and are not listed one by one in embodiments of this application.

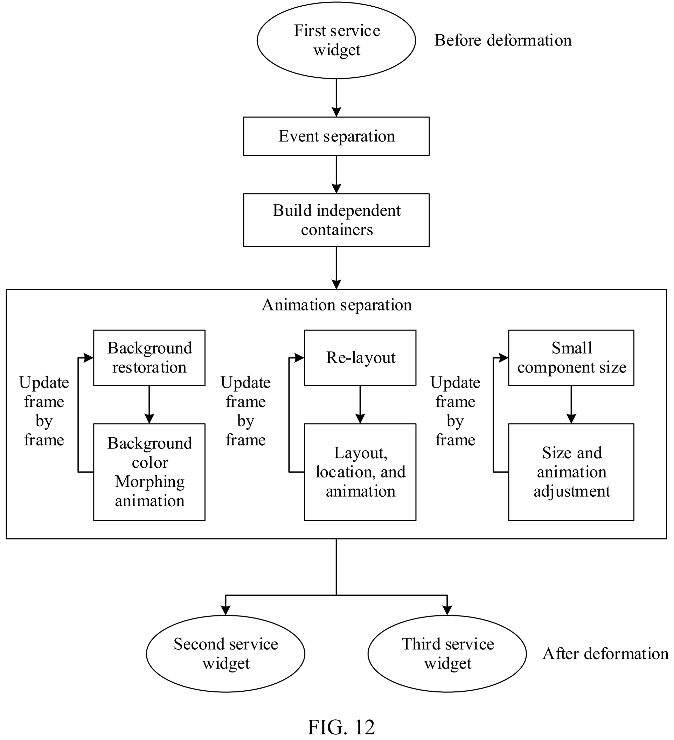

In some embodiments of this application, as shown in FIG. 12, an animation (or animation effect) corresponding to a process in which the electronic device switches from displaying the first service widget to displaying the second service widget and the third service widget may be implemented by using the following method: The electronic device may first separate an event (event) of displaying the first service widget into an event of displaying the second service widget and an event of displaying the third service widget, then respectively build two independent containers based on the event of displaying the second service widget and the event of displaying the third service widget, and perform animation (or animation effect) separation based on the two independent containers. The two independent containers are respectively used to carry the second service widget and the third service widget. The animation separation includes: The electronic device performs processing such as background restoration, re-layout, and small component size adjustment on the service widget in each independent container frame by frame. The background restoration processing is used to adjust a background color, a morphing animation, and the like during display of the service widget. The re-layout processing is used to re-adjust a layout, a location, an animation, and the like during display of different service widgets. The small component size adjustment processing is used to adjust a size, a layout, an animation, and the like of a small component (for example, an icon or a control) in the service widget.

### Second part: configuration of the associated service widget (for example, the second service widget/the third service widget described above)

In some embodiments of this application, at least one associated service widget of the first service widget may include an associated service widget that is of the first service widget and that is preconfigured by the user, and/or an associated service widget that is of the first service widget and that is automatically determined by the electronic device (namely, an associated service widget that is of the first service widget and that is recommended by the electronic device).

The following first describes in detail a method for configuring the associated service widget of the first service widget by the user.

In some embodiments of this application, the electronic device may provide, for the user, a control entry used to configure an association relationship between different service widgets, and the user may perform a corresponding operation through the control entry, to configure the association relationship between different service widgets. For example, the user configures the associated service widget of the first service widget. For a specific configuration process, refer to any one of the following manners.
(1) In a first optional implementation, when displaying the first service widget, the electronic device may display, on the first service widget, a configuration icon (or a configuration control) used to trigger configuration of the associated service widget of the first service widget. The configuration icon may be an icon corresponding to a deformation display control on a music service widget, the configuration icon may be an icon indicating an area in which the deformation display control on the music service widget is located, the configuration icon may be a setting icon displayed on the music service widget, or the configuration icon may be an icon that is displayed on the music service widget and that indicates an application to which the music service widget belongs. For the deformation display control, refer to the descriptions in the foregoing embodiments. Details are not described herein again. The electronic device may display a widget association configuration interface in response to an operation performed by the user on the configuration icon. The widget association configuration interface includes at least an add control used to trigger adding of the associated service widget, and may further include the first service widget, at least one associated service widget of the first service widget, and the like. The at least one associated service widget may be configured by the user, or may be automatically determined by the electronic device. Optionally, the widget association configuration interface may further include other related control controls, which are not listed one by one in embodiments of this application. The electronic device may add, in response to an operation performed by the user on the add control, an associated service widget indicated by the user. The electronic device may delete the associated service widget in response to a delete operation performed by the user on any associated service widget.

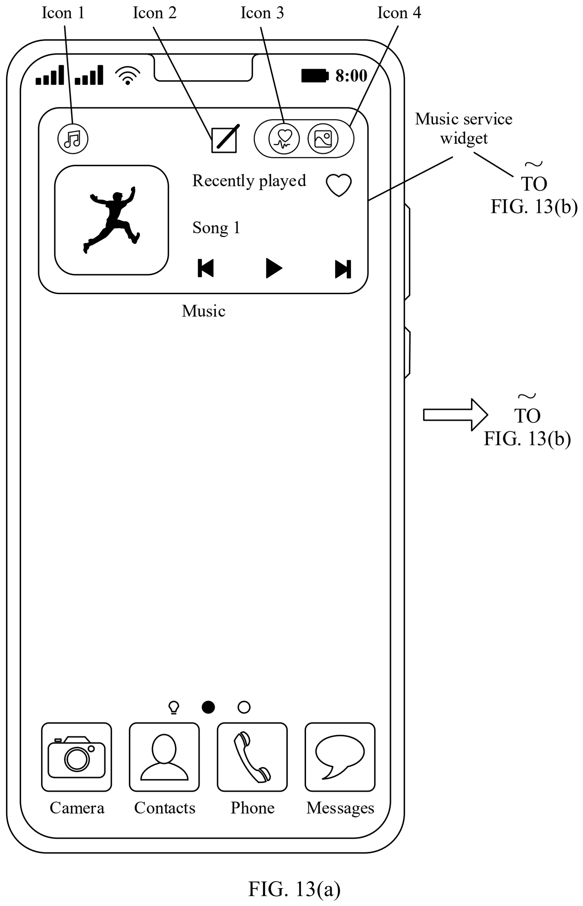

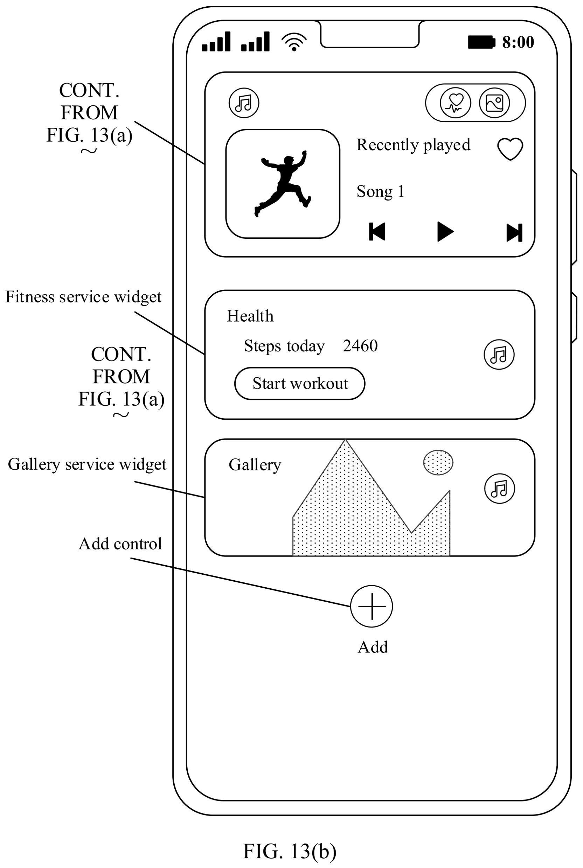

Embodiment 7: For example, the operation performed by a user on the configuration icon may be an operation of touching and holding the configuration icon. For example, the first service widget is a music service widget shown in FIG. 13(a), and the configuration icon may be an icon 1, an icon 2, an icon 3, or an icon 4 shown in FIG. 13(a). In actual display, the electronic device may select at least one icon from the icon 1 to the icon 4 for display. In response to the operation of touching and holding the configuration icon by the user, the electronic device may switch from displaying the interface shown in FIG. 13(a) to displaying a widget association configuration interface shown in FIG. 13(b). The widget association configuration interface may include a music service widget, an add control, and a fitness service widget and a gallery service widget that are associated with the music service widget.

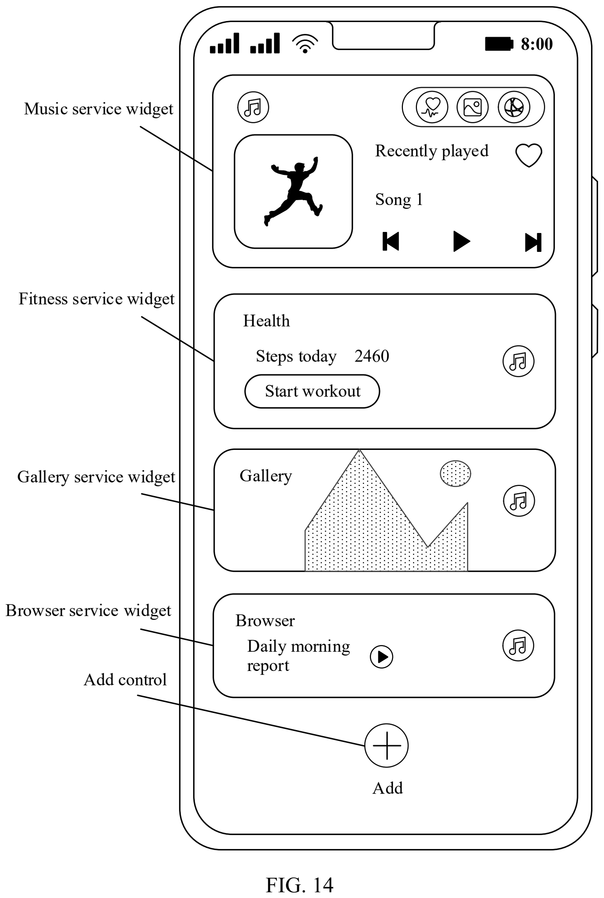

In a possible case, after the electronic device displays the widget association configuration interface shown in FIG. 13(b), when receiving an operation performed on the add control (for example, an operation of tapping the add control), the electronic device may switch from displaying the widget association configuration interface shown in FIG. 13(b) to displaying a widget selection interface. The widget selection interface may include at least one candidate service widget, and the user may select an associated service widget of the music service widget from the at least one candidate service widget. The electronic device may add, to the widget association configuration interface in response to the operation of the user, the associated service widget selected by the user. For example, after the user selects a browser service widget from the widget selection interface as the associated service widget, the electronic device may switch to display an interface shown in FIG. 14. The interface is an updated widget association configuration interface, and compared with the widget association configuration interface shown in FIG. 13(b), namely, the widget association configuration interface before update, in the updated widget association configuration interface, an associated service widget configured by the user, namely, the browser service widget, is added. In this case, associated service widgets of the music service widget include the fitness service widget, the gallery service widget, and the browser service widget. It should be understood that the widget selection interface and the manner in which the user selects the associated service widget are merely examples. In actual application, the widget selection interface and the manner in which the user selects the associated service widget are not limited thereto. This is not specifically limited in embodiments of this application.

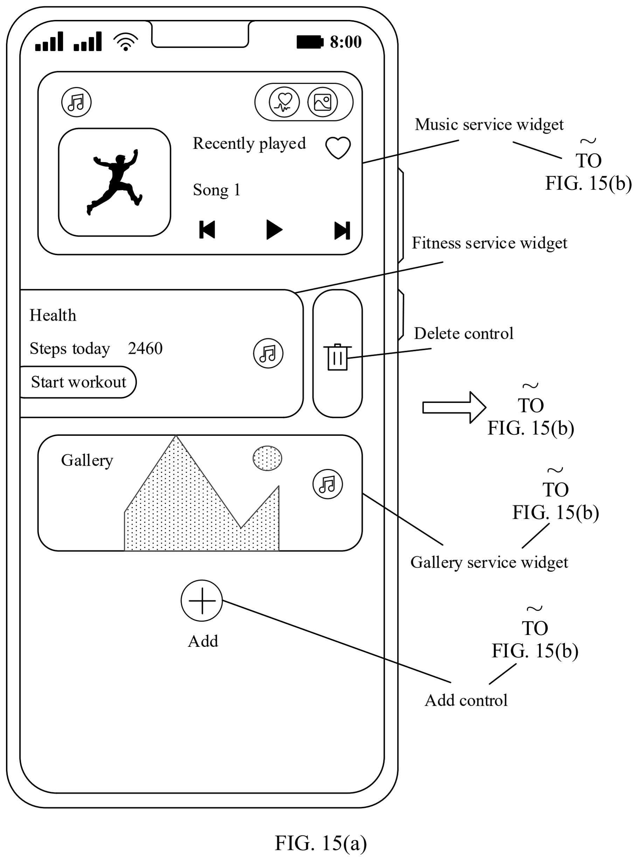

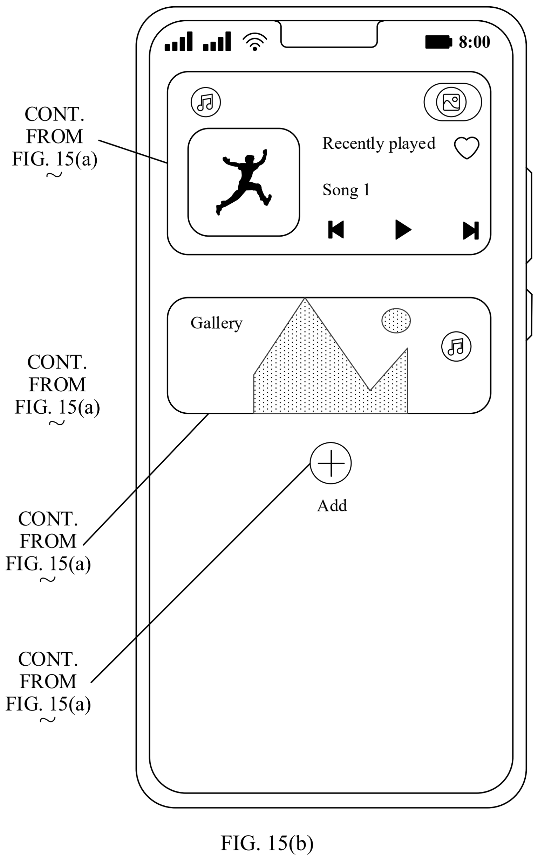

In another possible case, after the electronic device displays the widget association configuration interface shown in FIG. 13(b), when receiving an operation performed on the fitness service widget (for example, an operation of sliding the fitness service widget to the left), the electronic device may switch from displaying the interface shown in FIG. 13(b) to displaying an interface shown in FIG. 15(a), and a delete control corresponding to the fitness service widget is added to the interface. In response to an operation performed by the user on the delete control (for example, an operation of tapping the delete control), the electronic device may switch from displaying the interface shown in FIG. 15(a) to displaying the interface shown in FIG. 15(b), and the fitness service widget is deleted from the interface. In this case, the associated service widget of the music service widget includes the gallery service widget. It should be understood that the manner in which the user deletes the associated service widget is merely an example. In actual application, the manner in which the user deletes the associated service widget is not limited thereto. This is not specifically limited in embodiments of this application.

(2) In a second optional implementation, the electronic device may display the widget association configuration interface in the foregoing embodiment in response to an operation performed by the user on the first service widget, and may perform subsequent processing according to the method in the foregoing embodiment.

For example, the operation performed by the user on the first service widget may be an operation of touching and holding the first service widget. For example, the first service widget is the music service widget shown in FIG. 13(a). In response to an operation of touching and holding the music service widget by the user, the electronic device may switch from displaying the interface shown in FIG. 13(a) to displaying the widget association configuration interface shown in FIG. 13(b), and may perform subsequent processing according to the method described in Embodiment 7 above.

(3) In a third optional implementation, the electronic device may display a widget editing interface in response to an operation performed by the user on the first service widget. The widget editing interface includes at least the first service widget and an edit control used to trigger editing of the associated service widget of the first service widget. The electronic device may display the widget association configuration interface in the foregoing embodiment in response to an operation performed by the user on the edit control, and may perform subsequent processing according to the method in the foregoing embodiment.

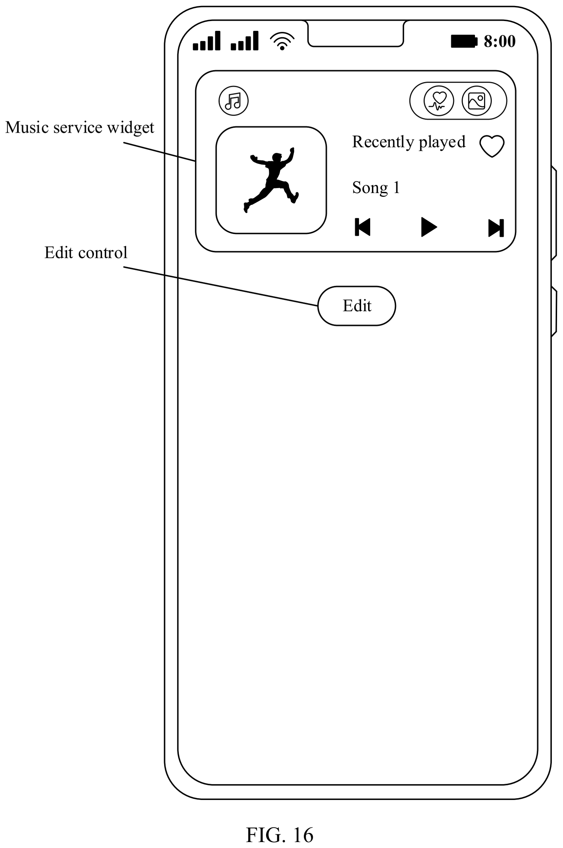

For example, the operation performed by the user on the first service widget may be an operation of touching and holding the first service widget, and the operation performed by the user on the edit control may be an operation of tapping the edit control. For example, the first service widget is the music service widget shown in FIG. 13(a). In response to an operation of touching and holding the music service widget by the user, the electronic device may switch from displaying the interface shown in FIG. 13(a) to displaying a widget editing interface shown in FIG. 16, and the widget editing interface includes a music service widget and an editing control. In response to an operation of tapping the edit control in the widget editing interface by the user, the electronic device may switch from displaying the widget editing interface shown in FIG. 16 to displaying the widget association configuration interface shown in FIG. 13(b), and may perform subsequent processing according to the method described in Embodiment 7 above.

(4) In a fourth optional implementation, the electronic device may provide, in a settings application, a control interface used to configure associated service widgets of different service widgets, and different service widgets include the first service widget. The electronic device may display the widget association configuration interface in the foregoing embodiment in response to an operation of selecting the first service widget in the control interface by the user, and may perform subsequent processing according to the method in the foregoing embodiment.

According to the foregoing method, the electronic device may cooperate with the user in configuring the associated service widget of the service widget in a plurality of different manners, so that flexibility and practicability are high.

After configuring the associated service widget according to the foregoing method, the electronic device may further perform deformation and display on the service widget based on the configured association relationship of the service widgets according to the method described in content of the first part.

In some embodiments of this application, the electronic device may provide, for the user, a control entry used to configure deformation conditions corresponding to different service widgets, and the user may perform a corresponding operation through the control entry, to configure the deformation conditions corresponding to different service widgets. For a specific method, refer to the foregoing method for configuring the associated service widget of the first service widget by the user. Details are not described in embodiments of this application.

The following describes a method for automatically determining the associated service widget of the first service widget by the electronic device.

In some embodiments of this application, the electronic device may determine an association relationship between different service widgets based on scene information collected in a historical time period. The historical time period may be a specified time period, for example, a past month or a past week. Optionally, the electronic device may perform AI analysis on the obtained scene information by using an artificial intelligence (artificial intelligence, AI) model, to obtain the association relationship between different service widgets. Optionally, the scene information may include at least one of the feature information in the foregoing embodiment such as the time feature, the spatial feature, the attribute feature of the electronic device, the status feature of the electronic device, the attribute feature of the user, the status feature of the user, the attribute feature of the service widget, the display status feature of the service widget, the attribute feature of the application, and the status feature of the application. The scene information may further include other scene feature information related to the electronic device, the user, or display of the service widget. This is not specifically limited in embodiments of this application.

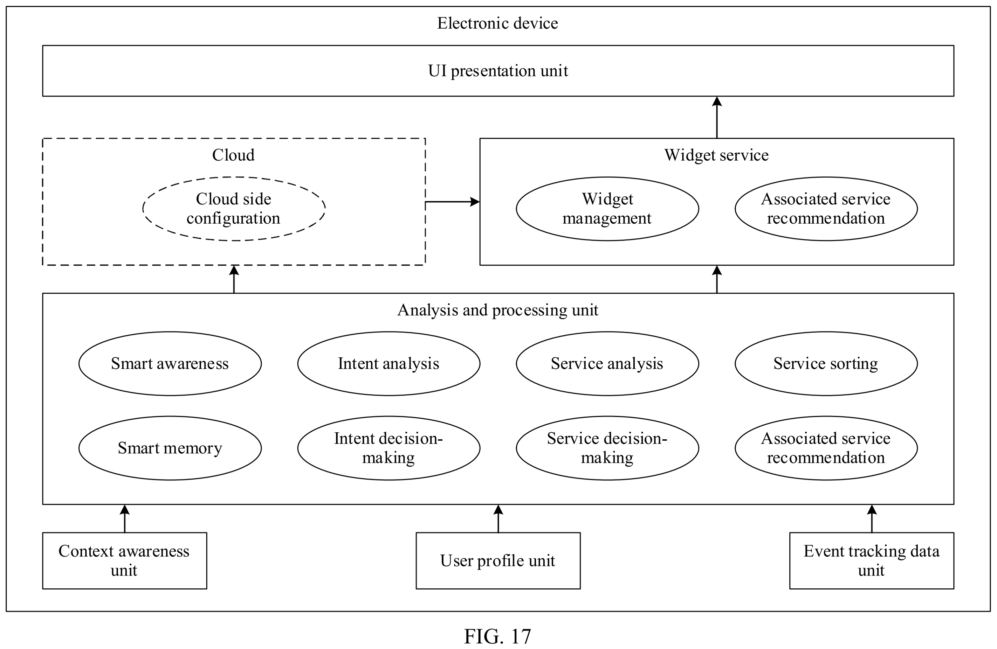

FIG. 17 is a diagram of an architecture of a possible recommendation system according to an embodiment of this application. As shown in FIG. 17, the recommendation system may be deployed in an electronic device. The recommendation system may include a context awareness unit, a user profile unit, an event tracking data unit, an analysis and processing unit, a widget service, and a user interface (user interface, UI) presentation unit.

The context awareness unit has a context awareness and combination capability, and may be configured to: collect feature information related to a scene of the electronic device or an external scene of the electronic device such as a time feature, a spatial feature, an attribute feature of the electronic device, and a status feature of the electronic device, and send the collected feature information to the analysis and processing unit. For example, the context awareness unit may be configured to obtain feature information such as current time, current space, ambient light in the current space, and a motion status and a device status of the electronic device.

The user profile unit may be configured to: collect user-related feature information such as an attribute feature of a user and a status feature of the user, and send the collected feature information to the analysis and processing unit. For example, the user profile unit may be configured to obtain feature information such as an age, a gender, a motion status, an interest and a hobby, and a behavior habit of the user.

The event tracking data unit may be configured to: collect information related to an internal scene of the electronic device such as an attribute feature of a service widget, a display status feature of the service widget, an attribute feature of an application, and a status feature of the application, and send the collected feature information to the analysis and processing unit. For example, the event tracking data unit may be configured to obtain feature information such as use duration and use time of an application or a service widget.

The analysis and processing unit may perform analysis and processing such as smart awareness, smart memory, intent analysis, intent decision-making, service analysis, service decision-making, service sorting, and associated service recommendation based on the feature information from the context awareness unit, the user profile unit, and the event tracking data unit, and determine an association relationship between different service widgets based on an analysis and processing result. After determining the association relationship between different service widgets, the analysis and processing unit may send the association relationship to the widget service. Optionally, the analysis and processing unit may further send the association relationship between different service widgets to a cloud. The cloud may perform storage, management, and the like on the association relationship between different service widgets. In this manner, the widget service may alternatively obtain the association relationship between different service widgets from the cloud.

The widget service may be used to manage the service widget, and may further obtain, from the analysis and processing unit or the cloud, the association relationship that is between different service widgets and that is automatically determined by the electronic device, and recommend an associated service widget based on the obtained association relationship between different service widgets.

The UI presentation unit may be configured to display the service widget. For example, the UI presentation unit may perform deformation and display on the service widget according to the method in embodiments of this application.

The electronic device may automatically determine the associated service widget of the first service widget according to the foregoing method.

It should be understood that the architecture of the recommendation system described above is merely an example. In actual application, the architecture may include more or fewer functional modules (or services), or functions of modules may be divided in another manner, or functional modules may not be divided, but operate as a whole.

In some embodiments of this application, the associated service widget that is of the first service widget and that is automatically determined by the electronic device and the associated service widget that is of the first service widget and that is configured by the user may be sorted, displayed, or undergo other processing in a same manner or according to a same rule, or may be separately sorted, displayed, or undergo other processing.

Optionally, the associated service widget that is of the first service widget and that is automatically determined by the electronic device and the associated service widget that is of the first service widget and that is configured by the user may be displayed differentially, or the associated service widget that is of the first service widget and that is automatically determined by the electronic device may be displayed in a folded manner. Differential display may be displaying in different areas, adding different marks, or the like, provided that the user can distinguish between the associated service widget automatically determined by the electronic device and the associated service widget configured by the user. When the associated service widget that is of the first service widget and that is automatically determined by the electronic device is folded for display, the electronic device may display an expansion control used to trigger expanded display of the associated service widget that is of the first service widget and that is automatically determined by the electronic device. The electronic device may expand and display, in response to an operation performed by the user on the expansion control, the associated service widget that is of the first service widget and that is automatically determined by the electronic device. For example, the first service widget is the music service widget in Embodiment 7, and the fitness service widget and the browser service widget that are associated with the music service widget and that are shown in FIG. 13(b) may be configured by the user. In this scene, when displaying the associated service widget (namely, the fitness service widget and the browser service widget shown in FIG. 13(b)) of the music service widget configured by the user, the electronic device may further simultaneously display an expansion control. In response to an operation of tapping the expansion control by the user, the electronic device may expand and display, in the interface shown in FIG. 13(b) or a new interface, an associated service widget that is of the music service widget and that is automatically determined by the electronic device. Optionally, the user may further select at least one service widget from the associated service widget that is of the music service widget and that is automatically determined by the electronic device, and switch the at least one selected service widget to the associated service widget that is of the music service widget and that is configured by the user.

According to the method provided in the foregoing embodiment, the electronic device may determine the association relationship between different service widgets and/or automatically determine the association relationship between different service widgets based on the user operation. This helps efficiently perform associated display of the service widgets.

In some embodiments of this application, the electronic device may also automatically determine, based on the scene information collected in the historical time period, the deformation conditions corresponding to different service widgets. For a specific method, refer to the foregoing method for automatically determining the associated service widget of the first service widget by the electronic device. Details are not described in embodiments of this application.

In embodiments of this application, corresponding information set by the user is preferentially used for the association relationship, the deformation condition, and the like between different service widgets.

In some embodiments of this application, an association relationship between different applications may be set by the user, or may be automatically determined by the electronic device. For a specific method, refer to the foregoing method for determining the association relationship between different service widgets. Details are not described in embodiments of this application.

### Third part: combined display of the service widget

In some embodiments of this application, according to the method provided in the foregoing embodiment, after switching from displaying the first service widget to displaying the second service widget and the third service widget, when determining that a current scene meets a specified combination condition and/or a combination operation is received, the electronic device may further switch from displaying the second service widget and the third service widget to displaying the first service widget. The combination operation indicates to switch the second service widget and the third service widget to a service widget (namely, the first service widget) before deformation and display.

When determining that the current scene meets the combination condition, the electronic device may automatically switch from displaying the second service widget and the third service widget to displaying the first service widget. Alternatively, in response to the received combination operation, the electronic device may switch from displaying the second service widget and the third service widget to displaying the first service widget. Alternatively, when determining that the current scene meets the combination condition and the combination operation is received, the electronic device may switch from displaying the second service widget and the third service widget to displaying the first service widget.

In some embodiments of this application, the combination condition may be preset by the user, or may be automatically determined by the electronic device.

In some embodiments of this application, the combination condition may be related to at least one of the feature information in the foregoing embodiment such as the time feature, the spatial feature, the attribute feature of the electronic device, the status feature of the electronic device, the attribute feature of the user, the status feature of the user, the attribute feature of the service widget, the display status feature of the service widget, the attribute feature of the application, and the status feature of the application. For a method for setting and using the combination condition, refer to the method for setting and using the deformation condition in the foregoing embodiment. Details are not described in embodiments of this application.

In some embodiments of this application, the combination operation may be a gesture sliding operation performed on the display of the electronic device, or an operation performed on a related control displayed on the electronic device. For specific implementation of the combination operation, refer to the method related to the deformation operation in the foregoing embodiment. Details are not described in embodiments of this application again.

For example, in the scene described in Embodiment 3, after displaying the interface shown in FIG. 8a(b), the electronic device may further switch, after specified duration, from displaying the weather service widget and the water drinking reminder service widget shown in FIG. 8a(b) to displaying the weather service widget shown in FIG. 8a(a). The combination condition is that the specified duration elapses.

For another example, in the scene described in Embodiment 4, after displaying the interface shown in FIG. 9(b), the electronic device may further switch, in response to a sliding operation performed on the weather service widget and the water drinking reminder service widget (for example, an operation of pinching the weather service widget and the water drinking reminder service widget inward by the user through a right thumb and a right index finger), from displaying the weather service widget and the water drinking reminder service widget shown in FIG. 9(b) to displaying the weather service widget shown in FIG. 9(a).

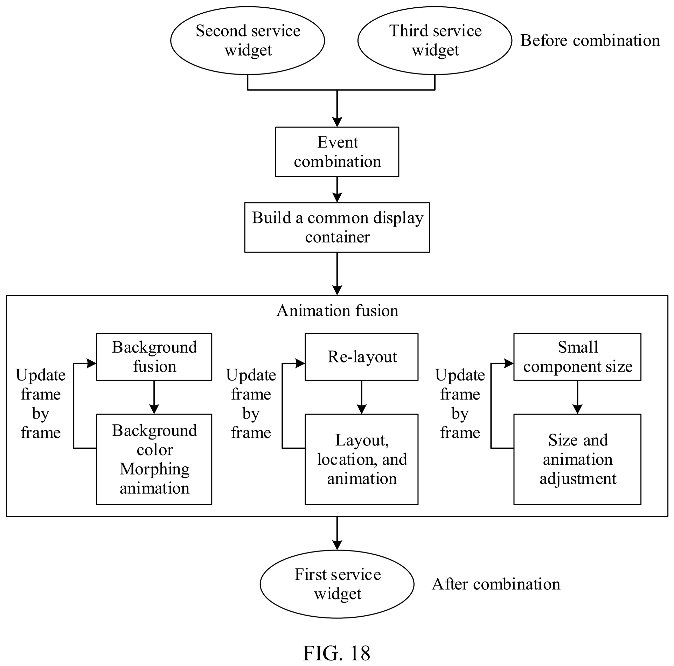

In some embodiments of this application, as shown in FIG. 18, an animation corresponding to a process in which the electronic device switches from displaying the second service widget and the third service widget to displaying the first service widget may be implemented by using the following method: The electronic device may first combine an event of displaying the second service widget and an event of displaying the third service widget into an event of displaying the first service widget, then build a display container based on the event of displaying the first service widget, and perform animation fusion based on the container. The container is used to carry the first service widget. The animation fusion includes: The electronic device performs processing such as background restoration, re-layout, and small component size adjustment on the service widget in the container frame by frame. The background restoration processing is used to adjust a background color, a morphing animation, and the like during display of the service widget. The re-layout processing is used to re-adjust a layout, a location, an animation, and the like during display of the service widget. The small component size adjustment processing is used to adjust a size, a layout, an animation, and the like of a small component (for example, an icon or a control) in the service widget.

In some embodiments of this application, when displaying a plurality of associated service widgets, when a current scene meets a specified combination condition and/or a combination operation is received, the electronic device may also switch, according to the related method provided in the foregoing embodiment, from displaying the plurality of associated service widgets to displaying one service widget associated with the plurality of associated service widgets. For example, according to the method provided in the foregoing embodiment, after switching from displaying the first service widget to displaying the second service widget and the third service widget, when determining that a current scene meets a specified combination condition and/or a combination operation is received, the electronic device may further switch from displaying the second service widget and the third service widget to displaying a fourth service widget. The fourth service widget is different from the first service widget, the fourth service widget is associated with the second service widget, and the fourth service widget is associated with the third service widget. A specific implementation process of the foregoing method is not described in detail in embodiments of this application.

In some embodiments of this application, according to the method provided in the foregoing embodiment, after switching from displaying the first service widget to displaying the second service widget and the third service widget, the electronic device may further adjust a combined display manner of the second service widget and the third service widget based on a received user operation, or automatically adjust the combined display manner of the second service widget and the third service widget when a specified scene condition is met. For example, adjustment performed by the electronic device on the combined display manner of the second service widget and the third service widget may be at least one of the following: adjustment of a size of the second service widget and/or a size of the third service widget, adjustment of a display location of the second service widget and/or a display location of the third service widget, and adjustment of a relative location between the second service widget and the third service widget.

For example, after displaying the weather service widget and the water drinking reminder service widget in the manner shown in FIG. 8b(b), the electronic device may further switch, in response to a received user operation, to display the weather service widget and the water drinking reminder service widget in the manner shown in FIG. 8b(a). In this way, the service widget that the user is currently interested in, namely, the weather service widget, is displayed in an expanded manner, so that the user can perform a subsequent operation on the weather service widget.

For another example, after displaying the interface shown in FIG. 10b, the electronic device may further switch, in response to a received user operation, from displaying the interface shown in FIG. 10b to displaying the interface shown in FIG. 10c. Alternatively, after displaying the interface shown in FIG. 10c, the electronic device may further switch, in response to a received user operation, from displaying the interface shown in FIG. 10c to displaying the interface shown in FIG. 10b.

For another example, in the interface shown in FIG. 10b, the display manner of the water drinking reminder service widget and the music service widget is that the water drinking reminder service widget covers the part of the area of the music service widget. After displaying the interface shown in FIG. 10b in this manner, the electronic device may further switch, in response to a received user operation, the display manner of the water drinking reminder service widget and the music service widget to the following: The music service widget covers a part of an area of the water drinking reminder service widget. In this way, effect of switching the service widget displayed at the top layer can be implemented.

The user operation may be preconfigured by the electronic device, or may be preset by the user. This is not specifically limited in embodiments of this application.

It should be noted that specific implementation procedures provided in the foregoing embodiments are merely examples of the method procedures applicable to embodiments of this application. An execution sequence of the steps may be correspondingly adjusted based on an actual requirement, and another step may be added, or some steps may be removed. For specific implementations of the steps, refer to the related descriptions in the foregoing embodiments. Details are not described herein again.

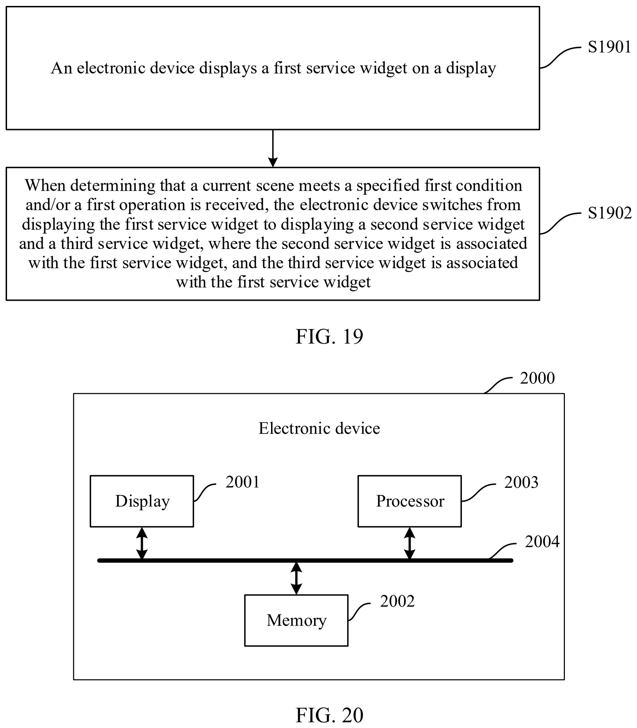

Based on the foregoing embodiments and a same technical concept, an embodiment of this application further provides a display method. As shown in FIG. 19, the method may include the following steps.

S1901: An electronic device displays a first service widget on a display.

For example, the first service widget may be the first service widget in the foregoing embodiment. For the first service widget, refer to the descriptions of the first service widget in the foregoing embodiment. Details are not described herein again.

S1902: When determining that a current scene meets a specified first condition and/or a first operation is received, the electronic device switches from displaying the first service widget to displaying a second service widget and a third service widget, where the second service widget is associated with the first service widget, and the third service widget is associated with the first service widget.

For example, the second service widget and the third service widget may be respectively the first service widget and the second service widget in the foregoing embodiment. For the second service widget, refer to the descriptions of the second service widget in the foregoing embodiment. Details are not described herein again. For the third service widget, refer to the descriptions of the third service widget in the foregoing embodiment. Details are not described herein again.

For example, the first condition may be the deformation condition in the foregoing embodiment, and the first operation may be the deformation operation in the foregoing embodiment. Details are not described herein again.

In some embodiments of this application, in an optional implementation, before determining that the current scene meets the specified first condition and/or the first operation is received, the electronic device may determine the second service widget and the third service widget in response to a received second operation, where the second operation indicates the second service widget and the third service widget. For a specific implementation of the method, refer to the method for configuring the associated service widget of the first service widget by the user in the foregoing embodiment. Details are not described herein again.

In another optional implementation, before determining that the current scene meets the specified first condition and/or the first operation is received, the electronic device may determine the second service widget and the third service widget based on reference information, where the reference information includes at least one of the following information collected in a specified historical time period during display of the first service widget: time information, spatial location information of the electronic device, environment feature information of space in which the electronic device is located, attribute information of the electronic device, status information of the electronic device, user profile information of a user of the electronic device, status information of the user of the electronic device, attribute information of a specified application in the electronic device, status information of the specified application, attribute information of the first service widget, and status information of the first service widget. For a specific implementation of the method, refer to the method for automatically determining the associated service widget of the first service widget by the electronic device in the foregoing embodiment. Details are not described herein again.

In some embodiments of this application, the second service widget may be determined by the electronic device according to any method described in content of the second part in the foregoing embodiment, and the third service widget may be determined by the electronic device according to any method described in the content of the second part in the foregoing embodiment.

In some embodiments of this application, before determining that the current scene meets the specified first condition, the electronic device may determine the first condition in response to a received third operation, where the third operation indicates the first condition. For a specific implementation of the method, refer to the method for configuring the deformation condition by the user in the foregoing embodiment. Details are not described herein again. In some embodiments of this application, before determining that the current scene meets the specified first condition, the electronic device may alternatively automatically determine the first condition based on scene information collected in a historical time period. For a specific implementation of the method, refer to the method for automatically determining the deformation condition by the electronic device in the foregoing embodiment. Details are not described herein again.

In some embodiments of this application, after switching from displaying the first service widget to displaying the second service widget and the third service widget, when determining that a current scene meets a specified second condition and/or a fourth operation is received, the electronic device may switch from displaying the second service widget and the third service widget to displaying the first service widget, where the second condition may be the combination condition described in the foregoing embodiment, and the fourth operation may be the combination operation described in the foregoing embodiment. Details are not described herein again. Alternatively, when determining that a current scene meets a specified third condition and/or a fifth operation is received, the electronic device may switch from displaying the second service widget and the third service widget to displaying a fourth service widget, where the fourth service widget is associated with the second service widget, and the fourth service widget is associated with the third service widget. The third condition may be the combination condition in the foregoing embodiment, the fifth operation may be the combination operation in the foregoing embodiment, and the fourth service widget may be the fourth service widget in the foregoing embodiment. Details are not described herein again.

In some embodiments of this application, after switching from displaying the second service widget and the third service widget to displaying the first service widget, when determining that a current scene meets a specified fourth condition and/or a sixth operation is received, the electronic device may switch from displaying the first service widget to displaying a fifth service widget and a sixth service widget, where the fifth service widget is associated with the first service widget, and the sixth service widget is associated with the first service widget. The fourth condition may be a deformation condition different from the first condition, and/or the sixth operation may be a deformation operation different from the first operation. The fifth service widget and the sixth service widget may be service widgets associated with the first service widget, where the fifth service widget is different from the second service widget, and/or the sixth service widget is different from the third service widget.

In some embodiments of this application, after switching from displaying the second service widget and the third service widget to displaying the first service widget, the electronic device may display a first interface in response to a received seventh operation, where the first interface includes at least one service widget associated with the first service widget, and the at least one service widget includes the third service widget. The electronic device may delete the third service widget in the first interface in response to a received eighth operation, where the eighth operation indicates to remove an association relationship between the third service widget and the first service widget. Alternatively, the electronic device may add a seventh service widget to the first interface in response to a received ninth operation, where the ninth operation indicates to associate the seventh service widget with the first service widget.

For example, the first interface may be the widget association configuration interface in the foregoing embodiment. For the first interface, refer to the descriptions of the widget association configuration interface in the foregoing embodiment. Details are not described herein again.

Optionally, the seventh operation may be an operation performed on the first service widget. Alternatively, the seventh operation may be an operation performed on a second control on the first service widget, and the second control is used to trigger display of the first interface. Alternatively, the seventh operation may include a first sub-operation and a second sub-operation, the first sub-operation indicates to display a third control, the third control is used to trigger display of the first interface, and the second sub-operation is an operation performed on the third control.

For example, the seventh operation may be the operation that is used to trigger display of the widget association configuration interface and that is described in the content of the second part in the foregoing embodiment. Details are not described herein again. For example, the first sub-operation may be the operation of touching and holding the first service widget in the content of the second part in the foregoing embodiment, the third control may be the edit control in the content of the second part in the foregoing embodiment, and the second sub-operation may be the operation of tapping the edit control in the content of the second part in the foregoing embodiment.

Optionally, the eighth operation may include a third sub-operation and a fourth sub-operation, the third sub-operation indicates to display a fourth control, the fourth control is used to trigger removal of the association relationship between the third service widget and the first service widget, and the fourth sub-operation is an operation performed on the fourth control.

For example, the eighth operation may be the operation that is used to delete the associated service widget and that is described in the content of the second part in the foregoing embodiment. Details are not described herein again. For example, if the third service widget may be the fitness service widget in Embodiment 7, the third sub-operation may be the operation performed on the fitness service widget (for example, the operation of sliding the fitness service widget to the left), the fourth control may be a delete control, and the fourth sub-operation may be the operation performed on the delete control (for example, the operation of tapping the delete control).

Optionally, the ninth operation may include a fifth sub-operation and a sixth sub-operation, the fifth sub-operation is an operation performed on a fifth control, the fifth control is used to trigger display of at least one candidate service widget, and the sixth sub-operation is used to select the seventh service widget from the at least one candidate service widget.

For example, the ninth operation may be the operation that is used to add the associated service widget and that is described in the content of the second part in the foregoing embodiment. Details are not described herein again. For example, the fifth control may be the add control in the foregoing embodiment, and the fifth sub-operation may be the operation performed on the add control (for example, the operation of tapping the add control). The electronic device may display the widget selection interface in response to the fifth sub-operation, where the widget selection interface may include at least one candidate service widget. The sixth sub-operation may be the operation of selecting the associated service widget from the at least one candidate service widget in the widget selection interface.

In some embodiments of this application, after adding the seventh service widget to the first interface in response to the received ninth operation, the electronic device may display the first service widget in response to a received tenth operation, to switch to the service widget initially displayed. After displaying the first service widget, when determining that a current scene meets a specified fifth condition and/or an eleventh operation is received, the electronic device may switch from displaying the first service widget to displaying the second service widget and the seventh service widget, to perform switching and display on the service widget according to another rule or in another manner.

In some embodiments of this application, after switching from displaying the first service widget to displaying the second service widget and the third service widget, when determining that a current scene meets a specified scene condition and/or a twelfth operation is received, the electronic device may adjust a display location and/or a size of the second service widget and/or a display location and/or a size of the third service widget. For a specific implementation of the method, refer to the related method in the foregoing embodiment. Details are not described herein again.

In the foregoing method, for specific steps performed by the electronic device, refer to the related descriptions in the foregoing embodiments. Details are not described herein again.

Based on the foregoing embodiments and a same technical concept, an embodiment of this application further provides an electronic device. The electronic device may be configured to implement the display method provided in embodiments of this application. As shown in FIG. 20, the electronic device 2000 may include a display 2001, a memory 2002, one or more processors 2003, and one or more computer programs (not shown in the figure). The foregoing components may be coupled through one or more communication buses 2004.

The display 2001 is configured to display a related user interface like an application interface.

The memory 2002 stores the one or more computer programs (code), and the one or more computer programs include computer instructions. The one or more processors 2003 invoke the computer instructions stored in the memory 2002, so that the electronic device 2000 performs the display method provided in embodiments of this application.

In specific implementation, the memory 2002 may include a high-speed random access memory, and may also include a nonvolatile memory, for example, one or more magnetic disk storage devices, a flash device, or another nonvolatile solid-state storage device. The memory 2002 may store an operating system (which is briefly referred to as a system below), for example, an embedded operating system like Android, iOS, Windows, or Linux. The memory 2002 may be configured to store an implementation program of embodiments of this application. The memory 2002 may further store a network communication program. The network communication program may be used for communication with one or more additional devices, one or more user equipments, or one or more network devices.

The one or more processors 2003 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 20 is merely an implementation of the electronic device 2000 provided in this embodiment of this application. In actual application, the electronic device 2000 may alternatively include more or fewer components. This is not limited herein.

Based on the foregoing embodiments and a same technical concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same technical concept, an embodiment of this application further provides a computer program product. The computer program product includes a computer program or instructions. When the computer program or the instructions are run on a computer, the computer is enabled to perform the method provided in the foregoing embodiments.

All or some of the methods in embodiments of this application may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions in embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A display method, applied to an electronic device, wherein the method comprises:
displaying a first service widget on a display; and
when determining that a current scene meets a specified first condition and/or a first operation is received, switching from displaying the first service widget to displaying a second service widget and a third service widget, wherein the second service widget is associated with the first service widget, and the third service widget is associated with the first service widget.

2. The method according to claim 1, wherein display areas of the second service widget and the third service widget do not overlap, or the second service widget covers a part of an area of the third service widget, or the third service widget covers a part of an area of the second service widget.

3. The method according to claim 1 or 2, wherein the second service widget is the same as the first service widget, or the second service widget and the first service widget belong to a same application, or the second service widget and the first service widget belong to different applications; and
the third service widget and the first service widget belong to a same application, or the third service widget and the first service widget belong to different applications.

4. The method according to any one of claims 1 to 3, wherein before determining that the current scene meets the specified first condition and/or the first operation is received, the method further comprises:
determining the second service widget and the third service widget in response to a received second operation, wherein the second operation indicates the second service widget and the third service widget; or
determining the second service widget and the third service widget based on reference information, wherein the reference information comprises at least one of the following information collected in a specified historical time period during display of the first service widget: time information, spatial location information of the electronic device, environment feature information of space in which the electronic device is located, attribute information of the electronic device, status information of the electronic device, user profile information of a user of the electronic device, status information of the user of the electronic device, attribute information of a specified application in the electronic device, status information of the specified application, attribute information of the first service widget, and status information of the first service widget.

5. The method according to any one of claims 1 to 4, wherein the first operation is a sliding operation performed on the first service widget, or the first operation is an operation performed on a first control on the first service widget, wherein the first control is used to trigger one service widget to be deformed and displayed as a plurality of service widgets.

6. The method according to any one of claims 1 to 5, wherein before determining that the current scene meets the specified first condition, the method further comprises:
determining the first condition in response to a received third operation, wherein the third operation indicates the first condition.

7. The method according to any one of claims 1 to 6, wherein after switching from displaying the first service widget to displaying the second service widget and the third service widget, the method further comprises:
when determining that a current scene meets a specified second condition and/or a fourth operation is received, switching from displaying the second service widget and the third service widget to displaying the first service widget; or
when determining that a current scene meets a specified third condition and/or a fifth operation is received, switching from displaying the second service widget and the third service widget to displaying a fourth service widget, wherein the fourth service widget is associated with the second service widget, and the fourth service widget is associated with the third service widget.

8. The method according to claim 7, wherein after switching from displaying the second service widget and the third service widget to displaying the first service widget, the method further comprises:
when determining that a current scene meets a specified fourth condition and/or a sixth operation is received, switching from displaying the first service widget to displaying a fifth service widget and a sixth service widget, wherein the fifth service widget is associated with the first service widget, and the sixth service widget is associated with the first service widget.

9. The method according to claim 7, wherein after switching from displaying the second service widget and the third service widget to displaying the first service widget, the method further comprises:
displaying a first interface in response to a received seventh operation, wherein the first interface comprises at least one service widget associated with the first service widget, and the at least one service widget comprises the third service widget;
deleting the third service widget in the first interface in response to a received eighth operation, wherein the eighth operation indicates to remove an association relationship between the third service widget and the first service widget; or
adding a seventh service widget to the first interface in response to a received ninth operation, wherein the ninth operation indicates to associate the seventh service widget with the first service widget.

10. The method according to claim 9, wherein after adding the seventh service widget to the first interface in response to the received ninth operation, the method further comprises:
displaying the first service widget in response to a received tenth operation; and
when determining that a current scene meets a specified fifth condition and/or an eleventh operation is received, switching from displaying the first service widget to displaying the second service widget and the seventh service widget.

11. The method according to claim 9 or 10, wherein
the seventh operation is an operation performed on the first service widget; or
the seventh operation is an operation performed on a second control on the first service widget, and the second control is used to trigger display of the first interface; or
the seventh operation comprises a first sub-operation and a second sub-operation, the first sub-operation indicates to display a third control, the third control is used to trigger display of the first interface, and the second sub-operation is an operation performed on the third control.

12. The method according to any one of claims 1 to 11, wherein after switching from displaying the first service widget to displaying the second service widget and the third service widget, the method further comprises:
adjusting a display location and/or a size of the second service widget and/or a display location and/or a size of the third service widget in response to a received twelfth operation.

13. An electronic device, wherein the electronic device comprises a display, a memory, and one or more processors; and
the memory is configured to store computer program code, the computer program code comprises computer instructions, and when the computer instructions are executed by the one or more processors, the electronic device is enabled to perform the method according to any one of claims 1 to 12.

14. A computer-readable storage medium, wherein the computer-readable storage medium stores a computer program, and when the computer program is run on an electronic device, the electronic device is enabled to perform the method according to any one of claims 1 to 12.

15. A computer program product, wherein the computer program product comprises a computer program or instructions, and when the computer program or the instructions are run on an electronic device, the electronic device is enabled to perform the method according to any one of claims 1 to 12.
